# EUROPEAN PATENT APPLICATION

(11) **EP 4 593 111 A1**
(43) Date of publication of application: **30.07.2025**
(21) Application number: 25152177.9
(22) Date of filing: 16.01.2025
(51) Int. Cl.: H01M 4/38, H01M 4/62, H01M 10/052, H01M 4/04, H01M 4/02

(54) **ANODE FOR LITHIUM METAL BATTERY, LITHIUM METAL BATTERY INCLUDING THE SAME, AND METHOD OF PREPARING ANODE FOR LITHIUM METAL BATTERY**

(30) Priority: 25.01.2024 KR 20240011718
(71) Applicant: SAMSUNG SDI CO., LTD., Yongin-si, Gyeonggi-do 17084 (KR); IUCF-HYU (Industry-University Cooperation Foundation Hanyang University), Seoul (KR)
(72) Inventor: Bae, Woojin, 17084 Gyeonggi-do (KR); Lee, Kanghee, 17084 Gyeonggi-do (KR); Moon, Jongseok, 17084 Gyeonggi-do (KR); Kim, Heemin, 17084 Gyeonggi-do (KR); Park, Jongseok, 17084 Gyeonggi-do (KR); Woo, Hyunsik, 17084 Gyeonggi-do (KR); Shin, Juhun, 17084 Gyeonggi-do (KR); Hong, Donggi, 17084 Gyeonggi-do (KR); Pyo, Sujin, 17084 Gyeonggi-do (KR); Kim, Dongwon, 06219 Seoul (KR); Choi, Jaekyung, 03093 Seoul (KR); Ban, Ahyeon, 05112 Seoul (KR); Roh, Jinah, 03951 Seoul (KR)
(74) Representative: Michalski Hüttermann & Partner Patentanwälte mbB

(57) **Abstract**

A lithium metal battery may include an anode, and a method of preparing an anode for a lithium metal battery, wherein the anode may include an anode current collector; and an electrodeposition inducing layer disposed on the anode current collector, the electrodeposition inducing layer including a first electrodeposition inducing layer and a second electrodeposition inducing layer disposed between the first electrodeposition inducing layer and the anode current collector, the first electrodeposition inducing layer including a metal, and the second electrodeposition inducing layer including a conductive polymer.

## Description

### CROSS-REFERENCES TO RELATED APPLICATION

The present application claims priority to and the benefit of Korean Patent Application No. 10-2024-0011718, filed on January 25, 2024, in the Korean Intellectual Property Office, the entire content of which is incorporated herein by reference.

### BACKGROUND

### 1. Field

Embodiments of the present disclosure described herein are related to an anode for a lithium metal battery, a lithium metal battery including the anode, and a method of preparing an anode for a lithium metal battery.

### 2. Description of the Related Art

Currently, related art lithium batteries predominantly use carbon-based anode active materials such as graphite. Carbon-based anode active materials show little or no volume change during charging and discharging, and thus may ensure high stability of lithium batteries. However, the theoretical electric capacity of graphite may be as small as about 372 mAh/g.

Lithium metal may be used as an anode active material. Lithium metal has a very large theoretical electric capacity of about 3,860 mAh/g. However, lithium metal gives rise to the formation of dendrites on the surface of the lithium metal due to side reactions with electrolyte during charging/discharging, and the growth of such dendrites may cause short-circuits between a cathode and an anode. Consequently, the lifespan characteristics of a lithium metal battery including lithium metal may deteriorate.

As such, there is need or there may be a desire for a method or structure of improving the lifespan characteristics of a lithium metal battery including lithium metal.

### SUMMARY

Aspects according to one or more embodiments are directed toward an anode for a lithium metal battery, having a novel structure.

Aspects according to one or more embodiments are directed toward a lithium metal battery including an anode having a novel structure.

Aspects according to one or more embodiments are directed toward a method of preparing an anode for a lithium metal battery, having a novel structure.

Additional aspects will be set forth in part in the description which follows, and in part, will be apparent from the description, or may be learned by practice of the presented embodiments of the present disclosure.

According to one or more embodiments, an anode for a lithium metal battery includes: an anode current collector; and an electrodeposition inducing layer arranged on the anode current collector,

wherein the electrodeposition inducing layer includes a first electrodeposition inducing layer and a second electrodeposition inducing layer arranged between the first electrodeposition inducing layer and the anode current collector,
wherein the first electrodeposition inducing layer includes a metal, and
wherein the second electrodeposition inducing layer includes a conductive polymer.

According to one or more embodiments, a lithium metal battery includes a cathode including a cathode current collector and a cathode active material layer on a side, e.g., one side (or surface) of the cathode current collector;
the anode; and
an electrolyte layer arranged between the cathode and the anode.

According to one or more embodiments, a method of preparing a lithium metal battery includes: providing an anode current collector;
providing the anode current collector on a spin coater;
providing a second electrodeposition inducing layer containing a conductive polymer on the anode current collector by coating the anode current collector provided on the spin coater with a solution containing the conductive polymer; and
providing a first electrodeposition inducing layer onto the second electrodeposition inducing layer by immersing in a solution containing a metal, the anode current collector having the second electrodeposition inducing layer formed thereon.

### BRIEF DESCRIPTION OF THE DRAWINGS

The above and other aspects, features, and advantages of certain embodiments of the present disclosure will be more apparent from the following description taken in conjunction with the accompanying drawings, in which:
FIGS. 1A and 1B are cross-sectional views each being of an anode according to one or more example embodiments;
FIG. 2 is a cross-sectional view of an anode according to one or more example embodiments;
FIG. 3 is a cross-sectional view of an anode according to one or more example embodiments;
FIG. 4 is a cross-sectional view of an anode according to one or more example embodiments;
FIGs. 5A and 5B are cross-sectional scanning electron microscope (SEM) images of anodes of Example 1 and Comparative Example 1;
FIG. 6 is a graph showing XRD spectra of anodes of Example 1 and Comparative Example 1;
FIG. 7 is a graph showing charge-discharge curves of Example 1;
FIG. 8 is a graph showing the lifespan characteristics of lithium metal batteries prepared in Example 1 and Comparative Examples 1 and 2;
FIG. 9 is a diagram showing the state of coating of anodes including electrodeposition inducing layers prepared in Example 1 and Comparative Example 3, respectively;
FIG. 10 is a diagram showing the state of coating of anodes including electrodeposition inducing layers prepared in Example 1 and Comparative Example 4, respectively;
FIG. 11 is a diagram showing contact angles of electrodeposition inducing layers prepared in Example 1 and Comparative Example 5, respectively;
FIG. 12 is a cross-sectional SEM image of an anode of Reference Example 1;
FIG. 13 is a cross-sectional SEM image of an anode of Reference Example 2;
FIG. 14 is a cross-sectional SEM image of an anode of Reference Example 3;
FIG. 15 is a cross-sectional schematic diagram of a lithium metal battery according to one or more embodiments;
FIG. 16 is a cross-sectional schematic diagram of a lithium metal battery according to one or more embodiments;
FIG. 17 is a schematic diagram of a lithium metal battery according to one or more embodiments;
FIG. 18 is a schematic diagram of a lithium metal battery according to one or more embodiments;
FIG. 19 is a schematic diagram of a lithium metal battery according to one or more embodiments; and
FIG. 20 is a schematic diagram of a lithium metal battery according to one or more embodiments.

### DETAILED DESCRIPTION

Reference will now be made in more detail to one or more embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein.

Accordingly, one or more embodiments are merely described in more detail herein, by referring to the drawings, to explain aspects of the present description. As used herein, the term "and/or" includes any and all combinations of one or more of the associated listed items. As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the specification and the relevant art and should not be interpreted in an idealized sense or an overly formal sense unless expressly so defined herein.

One or more embodiments are described herein with reference to cross section illustrations that are schematic illustrations of idealized embodiments. As such, variations from the illustrated shapes as a result, for example, of manufacturing techniques and/or tolerances, are to be expected. Thus, one or more embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, angles that are illustrated as being sharp may be rounded. Thus, the regions illustrated in the drawings are schematic in nature and their shapes are not intended to illustrate the precise shape of a region and are not intended to limit the scope of the present claims.

These disclosures may, however, be embodied in many different forms and should not be construed as limited to the example embodiments set forth herein. Rather, these example embodiments are provided so that this disclosure will be thorough and complete, and will fully convey the scope of the disclosures to those skilled in the art. In the drawings, like numbers refer to like elements throughout, and duplicative descriptions thereof may not be provided.

It will also be understood that if (e.g., when) an element is referred to as being "on" or "over" another element, it can be directly on the other element or intervening elements may also be present. In contrast, if (e.g., when) an element is referred to as being "directly on" or "directly over" another element, there are no intervening elements present.

It will be understood that, although the terms first, second, third, and/or the like may be used herein to describe one or more suitable elements, components, regions, layers, and/or sections, these elements, components, regions, layers, and/or sections should not be limited by these terms. These terms are only used to distinguish one element, component, region, layer, or section, from another element, component, region, layer, or section. For example, a first element, component, region, layer, or section could be termed a second element, component, region, layer, or section, without departing from the teachings of the present disclosure.

The terminology used herein is for the purpose of describing particular embodiments only and is not intended to be limiting of the present disclosure. As used herein, the singular forms "a", "an" and "the" are intended to include the plural forms as well including "at least one", unless the context clearly indicates otherwise. The term "at least one" should not be interpreted as being limited to a singular form. As used herein, the term "and/or" includes any and all combinations of one or more of the associated listed items. It will be further understood that the terms "comprises" and/or "comprising," or "includes" and/or "including" if (e.g., when) used in this specification, specify the presence of stated features, regions, integers, steps, operations, elements, and/or components, but do not preclude the presence or addition of one or more other features, regions, integers, steps, operations, elements, components, and/or groups thereof.

Furthermore, spatially relative terms, such as "lower", "bottom", or "below" and "upper", "top", or "above" may be used herein to conveniently describe one element or aspect's relationship to another element or aspect. It will be understood that spatially relative terms are intended to encompass different orientations of the device while the device is in use or operated, in addition to the orientation depicted in the drawings. For example, if the device in one of the drawings is turned over, elements described as being on the "lower" or "bottom" side of other elements would then be oriented on "upper" or "top" sides of the other elements. Therefore, example term "lower" can therefore, encompasses both (e.g., simultaneously) an orientation of "lower" and "upper". The device may be placed in other orientations (may be rotated by about 90 degrees or in a different direction), and spatially relative terms used herein may be interpreted accordingly.

The term "Group" refers to a group in the Periodic Table of Elements of the Elements according to the 1-18 Group numbering system by the International Union of Pure and Applied Chemistry ("IUPAC").

The term "particle diameter" as used herein refers to an average particle diameter if the particle is spherical, and refers to an average major axis length if the particle is non-spherical. The particle diameter may be measured using a particle size analyzer (PSA). The term "particle diameter" as used herein refers to, for example, an average particle diameter. The term "average particle diameter" as used herein refers to, for example, a median particle diameter (D50).

D50 may refer to a particle size corresponding to a cumulative 50 vol% as calculated from the side of particles with the smallest particle size in a particle size distribution as measured by a laser diffraction method.

D90 may refer to a particle size corresponding to a cumulative 90 vol% as calculated from the side of particles with the smallest particle size in a particle size distribution as measured by a laser diffraction method.

D10 may refer to a particle size corresponding to a cumulative 10 vol% as calculated from the side of particles with the smallest particle size in a particle size distribution as measured by a laser diffraction method.

The term "metal" as used herein refers to both (e.g., simultaneously) metals and metalloids such as silicon and germanium, in an elemental or ionic state.

The term "alloy" as used herein refers to a mixture of two or more metals.

As used herein, the term "electrode active material" refers to an electrode material capable of undergoing lithiation and delithiation.

As used herein, the term "cathode active material" refers to a cathode material capable of undergoing lithiation and delithiation.

As used herein, the term "anode active material" refers to an anode material capable of undergoing lithiation and delithiation.

As used herein, the terms "lithiation" and "to lithiate" refer to a process of adding lithium to an electrode active material.

As used herein, the terms "delithiation" and "to delithiate" refer to a process of removing lithium from an electrode active material.

As used herein, the terms "charging" and "to charge" refer to a process of providing electrochemical energy to a battery.

As used herein, the terms "discharging" and "to discharge" refer to a process of removing electrochemical energy from a battery.

As used herein, the terms "positive electrode" and "cathode" refer to an electrode at which electrochemical reduction and lithiation take place during a discharging process.

As used herein, the terms "negative electrode" and "anode" refer to an electrode at which electrochemical oxidation and delithiation take place during a discharging process.

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

While specific examples and are described herein, there may be alternatives, modifications, variations, improvements, and substantial equivalents of the examples disclosed herein, including those that are not presently unforeseen or unappreciated, may arise from applicants or those skilled in the art. Accordingly, the appended claims (and equivalents thereof) as filed and as they can be amended are intended to embrace all such alternatives, modifications, variations, improvements and substantial equivalents.

Hereinbelow, an anode for a lithium metal battery, a lithium metal battery including the anode, and a method of preparing a lithium metal battery according to one or more embodiments will be described in greater detail.

### Anode

An anode for a lithium metal battery according to one or more embodiments may include an anode current collector; and an electrodeposition inducing layer arranged on the anode current collector. The electrodeposition inducing layer may include a first electrodeposition inducing layer and a second electrodeposition inducing layer arranged between the first electrodeposition inducing layer and the anode current collector. The first electrodeposition inducing layer may include a metal. The second electrodeposition inducing layer may include a conductive polymer.

Because the first electrodeposition inducing layer of an anode for a lithium metal battery includes a metal, the metal forms an alloy with lithium, and thus, the plating of lithium dendrites during charging and discharging may be suppressed or reduced, and lithium may be uniformly (e.g., substantially uniformly) plated. As a result, the cycling performance of a lithium metal battery may improve.

Because the second electrodeposition inducing layer of an anode for a lithium metal battery includes a conductive polymer, the surface roughness of the anode current collector may be alleviated. The conductive polymer may reduce the metal included in the first electrodeposition inducing layer, which facilitates distribution of the reduced metal on the second electrodeposition inducing layer. The conductive polymer, due to having excellent or suitable affinity to lithium, may suppress or reduce the plating of lithium dendrites and induce substantially uniform lithium plating. As a result, the cycling performance of a lithium metal battery may improve.

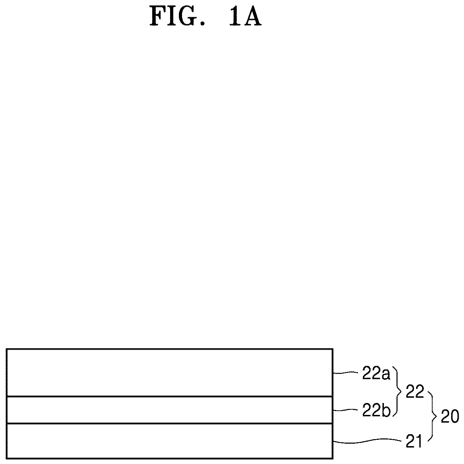

FIGS. 1A and 1B, and FIGS. 2 to 4 are cross-sectional schematic diagrams each being of an anode for a lithium battery according to one or more embodiments.

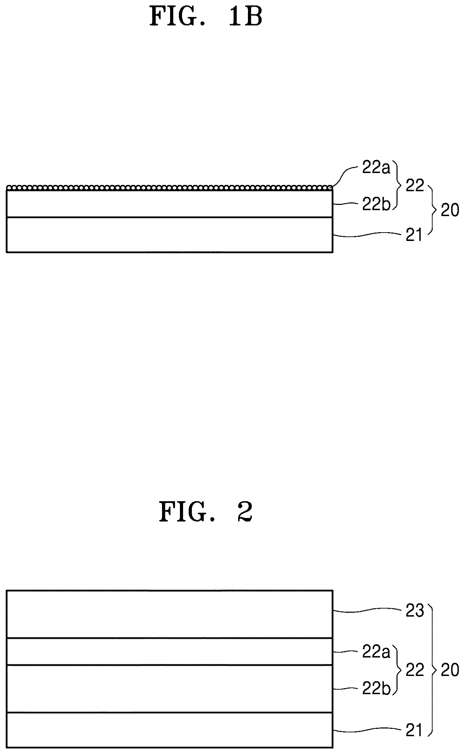

Referring to FIGS. 1A and 1B, an anode 20 may include an anode current collector 21; and an electrodeposition inducing layer 22 arranged on the anode current collector 21, wherein the electrodeposition inducing layer 22 may include a first electrodeposition inducing layer 22a and a second electrodeposition inducing layer 22b arranged between the first electrodeposition inducing layer 22a and the anode current collector 21. Referring to FIG. 2, an anode 20 may include the anode current collector 21; an anode active material layer 23 arranged on an anode current collector 21; and an electrodeposition inducing layer 22 arranged between the anode current collector 21 and the anode active material layer 23, wherein the electrodeposition inducing layer 22 may include a first electrodeposition inducing layer 22a and a second electrodeposition inducing layer 22b arranged between the first electrodeposition inducing layer 22a and the anode current collector 21.

### Anode: Electrodeposition Inducing Layer

Referring to FIGS. 1A and 2B and FIGS. 2 to 4, the anode 20 may include the anode current collector 21 and the electrodeposition inducing layer 22 arranged on the anode current collector 21. The electrodeposition inducing layer 22 may include the first electrodeposition inducing layer 22a and the second electrodeposition inducing layer 22b arranged between the first electrodeposition inducing layer 22a and the anode current collector 21. The electrodeposition inducing layer 22 may effectively prevent or reduce lithium dendrites from forming and/or growing on the surface of the electrodeposition inducing layer 22 or the anode active material layer 23 including lithium metal.

The first electrodeposition inducing layer 22a may include a metal, and for example, the first electrodeposition inducing layer 22a may include silver (Ag), gold (Au), platinum (Pt), palladium (Pd), aluminum (Al), bismuth (Bi), tin (Sn), zinc (Zn), and/or a (e.g., any suitable) combination thereof. The first electrodeposition inducing layer 22a may be made of a metal. If the first electrodeposition inducing layer 22a is made of a metal, the first electrodeposition inducing layer 22a may have a shape as shown in FIG. 1B, but the present disclosure is not limited thereto. In addition, the shape of the first electrodeposition inducing layer 22a shown in FIG. 1B may be applied to FIGS. 2 to 4, and FIGS. 15 and 16 as well.

The metal may be in a particulate form. The metal may be uniformly (e.g., substantially uniformly) distributed on the second electrodeposition inducing layer 22b in a particulate form. The metal may be non-homogeneously distributed on the second electrodeposition inducing layer 22b in a particulate form. The metal may be uniformly (e.g., substantially uniformly) distributed on the second electrodeposition inducing layer 22b in a particulate form, thereby forming the first electrodeposition inducing layer 22a. The metal may be non-homogeneously distributed on the second electrodeposition inducing layer 22b in a particulate form, thereby forming the first electrodeposition inducing layer 22a.

The average particle diameter of the metal particles may be, for example, about 150 nm to about 250 nm. If the particle diameter of the metal particles satisfies the aforementioned range, the first electrodeposition inducing layer 22a may have further improved suppression on dendrite formation and further improved substantially uniform lithium plating characteristics.

The first electrodeposition inducing layer 22a may further include a nitrate. For example, the first electrodeposition inducing layer 22a may further include silver nitrate, gold nitrate, platinum nitrate, palladium nitrate, aluminum nitrate, bismuth nitrate, tin nitrate, zinc nitrate, and/or a (e.g., any suitable) combination thereof.

The first electrodeposition inducing layer 22a may be formed by a metal reduced from a nitrate.

The first electrodeposition inducing layer 22a may include a conductive polymer. For example, the conductive polymer may be a polymer containing an electronically-conductive repeating unit, a polymer containing an ionically-conductive repeating unit, a polymer containing an electronically-conductive repeating unit and an ionically-conductive repeating unit, and/or a (e.g., any suitable) combination thereof.

The polymer containing the electronically-conductive repeating unit may be, for example, poly(3,4-ethylenedioxythiophene), polyaniline, polypyrrole, polyacetylene, polydopamine, and/or a (e.g., any suitable) combination thereof.

The polymer containing the ionically-conductive repeating unit may be polyethylene glycol, polypropylene oxide, polyimide, polyamine, polynitrile, and/or a (e.g., any suitable) combination thereof.

The polymer containing the electronically-conductive repeating unit and the ionically-conductive repeating unit may be a copolymer of the polymer containing the electronically-conductive repeating unit and the polymer containing the ionically-conductive repeating unit.

The copolymer may include a block copolymer including a block structure, and the block copolymer may include i) one or more polymers selected from among poly(3,4-ethylenedioxythiophene), polyaniline, polypyrrole, polyacetylene, and polydopamine, and ii) one or more polymers selected from among polyethylene glycol, polypropylene oxide, polyimide, polyamine, and polynitrile.

The block copolymer may be, for example, a block copolymer containing poly(3,4-ethylenedioxythiophene) as a first block and polyethylene glycol as a second block ; a block copolymer containing poly(3,4-ethylenedioxythiophene) as a first block, polyethylene glycol as a second block, and poly(3,4-ethylenedioxythiophene) as a third block; a block copolymer containing polyethylene glycol as a first block, poly(3,4-ethylenedioxythiophene) as a second block, and polyethylene glycol as a third block; a block copolymer containing poly(3,4-ethylenedioxythiophene) as a first block and polypropylene oxide as a second block; a block copolymer containing poly(3,4-ethylenedioxythiophene) as a first block, polypropylene oxide as a second, and poly(3,4-ethylenedioxythiophene) as a third block; and/or a (e.g., any suitable) combination of the aforementioned block copolymers.

For example, the block copolymer may include poly(3,4-ethylenedioxythiophene) and polyethylene glycol, and may be, for example, poly(3,4-ethylenedioxythiophene)-block-polyethylene glycol (PEDOT-block-PEG).

The electrodeposition inducing layer 22 may have a thickness of, for example, about 0.1 µm to about 25 µm.

The thickness of the electrodeposition inducing layer 22 may be, for example, about 0.1 µm to about 25 µm, about 1 µm to about 20 µm, about 1 µm to about 15 µm, about 1 µm to about 12 µm, about 1 µm to about 10 µm, about 1 µm to about 5 µm, or about 1 µm to about 2 µm.

The first electrodeposition inducing layer 22a may have a thickness of, for example, about 0.1 µm to about 20 µm.

The second electrodeposition inducing layer 22b may have a thickness of, for example, about 0.1 µm to about 0.2 µm.

On the XRD spectrum of an anode including the electrodeposition inducing layers, the peak at a diffraction angle 2θ=28°±0.5° may have a full width at half maximum of about 0.1 to about 0.5. For example, the full width at half maximum may be about 0.1 to about 0.5, or about 0.2 to about 0.4.

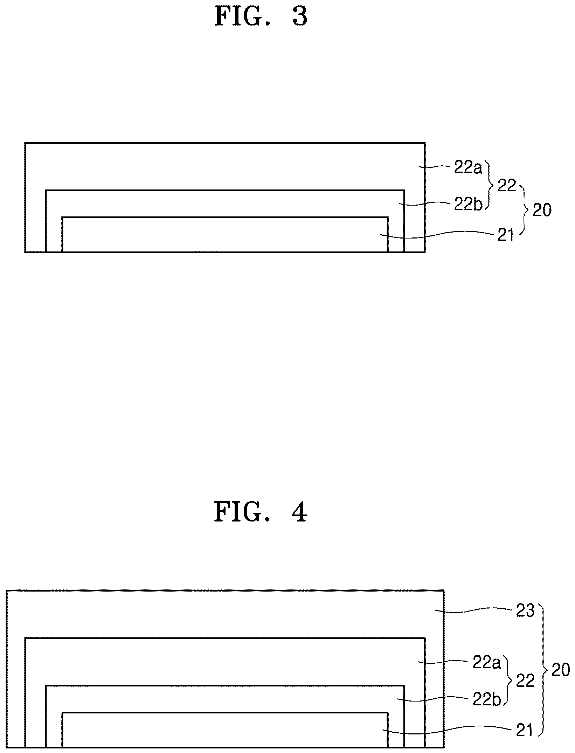

Referring to FIGS. 3 and 4, the electrodeposition inducing layer 22 may be further arranged on a side surface of the anode current collector 21.

Referring to FIG. 3, the anode 20 may include the anode current collector 21 and the electrodeposition inducing layer 22 arranged on the anode current collector 21, wherein the electrodeposition inducing layer 22 may include the first electrodeposition inducing layer 22a and the second electrodeposition inducing layer 22b arranged between the first electrodeposition inducing layer 22a and the anode current collector 21, and the electrodeposition inducing layer 22 may be arranged extending to at least one side surface of the anode current collector 21. The electrodeposition inducing layer 22 may completely cover the at least one side surface of the anode current collector 21. Because the electrodeposition inducing layer 22 is arranged extending to at least one side surface of the anode current collector 21, it may be possible to induce substantially uniform plating of lithium being plated on the electrodeposition inducing layer 22 and to suppress or reduce the formation of lithium dendrites.

### Anode: Anode Active Material Layer

Referring to FIGS. 1A and 1B, and FIG. 3, the anode 20 may not include (e.g., may exclude) the anode active material layer 23 arranged between the anode current collector 21 and the electrodeposition inducing layer 22. The anode 20 that is free of the anode active material layer 23, after being introduced into a lithium battery along with a cathode and an electrolyte, may include the anode active material layer 23 that is formed as lithium metal is plated between the anode current collector 21 and the electrodeposition inducing layer 22 by charging. The anode active material layer may be a plated lithium layer. The anode active material layer 23 may further include, for example, non-fibrous lithium or non-acicular lithium. The anode active material layer 23 may further include, for example, plate-shaped lithium.

Referring to FIGS. 2 and 4, the anode 20 for a lithium metal battery may include the anode current collector 21 and the anode active material layer 23 arranged on the anode current collector 21, and include the electrodeposition inducing layer 22 arranged between the anode current collector 21 and the anode active material layer 23, wherein the electrodeposition inducing layer 22 may include the first electrodeposition inducing layer 22a and the second electrodeposition inducing layer 22b arranged between the first electrodeposition inducing layer 22a and the anode current collector 21. For example, the anode active material layer 23 may be arranged between the electrodeposition inducing layer 22 and an electrolyte layer 30 which will be described in more detail.

The anode active material layer 23 may be, for example, a metal layer. The anode active material layer 23 may further include, for example, lithium metal or a lithium alloy. The anode active material layer 23 may include, for example, lithium foil, lithium powder, plated lithium, a lithium alloy, an organic compound containing lithium, and/or a (e.g., any suitable) combination thereof. An anode active material layer including lithium foil may be, for example, a lithium metal layer. The anode active material layer including lithium powder may be introduced by coating the anode current collector with a slurry containing lithium powder, a binder, and/or the like. The binder may be, for example, a fluorine-based binder, such as polyvinylidene fluoride (PVDF). The anode active material layer may not include (e.g., may exclude or be free-off) a carbon-based anode active material. In one or more embodiments, the anode active material layer may be formed of a metal-based anode active material. The anode active material layer 23 may further include, for example, non-fibrous lithium or non-acicular lithium. The anode active material layer 23 may further include, for example, plate-shaped lithium.

The lithium foil may have a thickness of, for example, about 1 µm to about 50 µm, about 1 µm to about 30 µm, about 10 µm to about 30 µm, or about 10 µm to about 80 µm. With the lithium foil having a thickness in the aforementioned ranges, the lifespan characteristics of a lithium battery including the electrodeposition inducing layers may further improve. The particle diameter of the lithium powder may be, for example, about 0.1 µm to about 3 µm, about 0.1 µm to about 2 µm, or about 0.1 µm to about 2 µm. With the lithium powder having a particle diameter in the aforementioned ranges, the lifespan characteristics of a lithium battery including the electrodeposition inducing layers may further improve.

The thickness of the anode active material layer 23 may be, for example, about 0.1 µm to about 100 µm, about 0.1 µm to about 80 µm, about 1 µm to about 80 µm, or about 10 µm to about 80 µm, but without being limited to the aforementioned ranges, the thickness of the anode active material layer 23 may be adjusted in accordance with the shape, capacity, and/or the like of a lithium battery being desired or required.

### Anode: Anode Current Collector

The anode current collector 21 may be formed of a material that does not react with lithium, for example, does not form an alloy or a compound with lithium. The material forming the anode current collector 21 may be, for example, copper, nickel, nickel-coated copper, stainless steel (SUS), iron (Fe), cobalt (Co), and/or the like, but without being necessarily limited to the aforementioned examples, may be any suitable material generally available and/or generally utilized as an electrode current collector in the art. The anode current collector 21 may be formed of one type or kind of the aforementioned metals, an alloy of two or more types (kinds) metals thereof, or a covering material. The anode current collector 21 may be, for example, a plate type or kind or a foil type or kind.

In one or more embodiments, the anode current collector 21 may include, for example, a base film and a metal layer arranged on a side, e.g., one side or both sides of the base film. For example, the base film may include a polymer. For example, the polymer may be a thermoplastic polymer. For example, the polymer may include polyethylene terephthalate (PET), polyethylene (PE), polypropylene (PP), polybutylene terephthalate (PBT), and/or a (e.g., any suitable) combination thereof. Because the base film includes a thermoplastic polymer, the base film is softened or liquefied in the event of a short circuit, thereby preventing or reducing a sudden increase in current. For example, the base film may be an insulator. For example, the metal layer may include indium (In), copper (Cu), magnesium (Mg), titanium (Ti), iron (Fe), cobalt (Co), nickel (Ni), zinc (Zn), aluminum (Al), germanium (Ge), lithium (Li), or an alloy thereof. For example, the metal layer may include copper (Cu), titanium (Ti), iron (Fe), cobalt (Co), nickel (Ni), or a (e.g., any suitrable) alloy thereof. In the event of an overcurrent, the metal layer may be disconnected, thus acting as an electrochemical fuse to provide protection against short circuits. A limiting current and a maximum current may be controlled or selected through controlling the thickness of the metal layer. The metal layer may be plated or deposited on the base film. Because as the thickness of the metal layer decreases, the limiting current and/or maximum current of the anode current collector 21 decrease, the stability of the lithium battery during a short circuit may improve. A lead-tab may be added on the metal layer for connection to the outside. The lead-tab may be welded to the metal layer or a metal layer/base film laminate by ultrasonic welding, laser welding, spot welding, and/or the like. As the base film and/or the metal layer melt during welding, the metal layer may be electrically connected to the lead-tab. For stronger welding between the metal layer and the lead-tab, a metal chip may be added between the metal layer and the lead-tab. The metal chip may be a flake of the same material as the metal of the metal layer. For example, the metal chip may be a metal foil, a metal mesh, and/or the like. For example, the metal chip may be copper foil, nickel foil, and/or the like. By welding the metal layer with the lead-tab after placing the metal chip on the metal layer, the lead-tab may be welded to a metal chip/metal layer laminate or a metal chip/metal layer/base film laminate. As the base film, the metal layer, and/or the metal chip melt during welding, the metal layer or the metal layer/metal chip laminate may be electrically connected to the lead-tab. A metal chip and/or a lead-tab may be further added on a part of the metal layer. For example, the base film may have a thickness of about 1 µm to about 50 µm, about 1.5 µm to about 50 µm, about 1.5 µm to about 40 µm, or about 1 µm to about 30 µm. With the base film having a thickness within the above ranges, the weight of the electrode assembly may be more effectively reduced. For example, the base film may have a melting point of about 100 °C to about 300 °C, about 100 °C to about 250 °C or less, or about 100 °C to about 200 °C. Because the base film has a melting point within the above ranges, the base film may easily melt and be bonded to the lead-tab while welding the lead-tab. To improve adhesion between the base film and the metal layer, a surface treatment such as corona treatment may be performed on the base film. For example, the metal layer may have a thickness of about 0.01 µm to about 3 µm, about 0.1 µm to about 3 µm, about 0.1 µm to about 2 µm, or about 0.1 µm to about 1 µm. With the metal layer having a thickness within the above ranges, the electrode assembly may provide stability while maintaining conductivity. For example, the metal chip may have a thickness of about 2 µm to about 10 µm, about 2 µm to about 7 µm, or about 4 µm to about 6 µm. With the metal chip having a thickness within the above ranges, the metal layer and the lead-tab may be more easily connected. With the anode current collector 21 having the aforementioned structure, the weight of the anode may be reduced, and as a result, the energy density of an all-solid secondary battery may improve.

In one or more embodiments, the anode current collector 21 may further include, for example, a thin film containing an element capable of forming an alloy with lithium on one side of the anode current collector 21. The thin film may be positioned between the anode current collector 21 and the anode active material layer 22. The thin film may include, for example, an element capable of forming an alloy with lithium. Examples of the element capable of forming an alloy with lithium may include gold, silver, zinc, tin, indium, silicon, aluminum, bismuth, and/or the like, but without being limited thereto, any element available in the art that is capable of forming an alloy with lithium may be utilized. The thin film may be composed of one of the aforementioned metals or may be composed of an alloy of one or more suitable kinds of metals. As the thin film is arranged on the anode current collector 21, the plated form of the second anode active material layer 25 being plated between the thin film 24 and the anode active material layer 22 may be further flattened, and the cycling performance of a lithium battery 1 may further improve.

For example, the thin film may have a thickness of about 1 nm to about 800 nm, about 10 nm to about 700 nm, about 50 nm to about 600 nm, or about 100 nm to about 500 nm. If the thickness of the thin film is less than about 1 nm, it may be difficult to achieve functions attributable to the thin film. If the thin film is excessively (or substantially) thick, the thin film absorbs lithium itself that the amount of lithium plated at the anode 20 decreases, and the cycling performance of the lithium battery 1 may deteriorate. The thin film may be positioned on the anode current collectors 21 by a vacuum deposition method, a sputtering method, a plating method and/or the like, but is not limited to the aforementioned methods, and any method available in the art that is capable of forming the thin film may be utilized.

### Lithium Battery

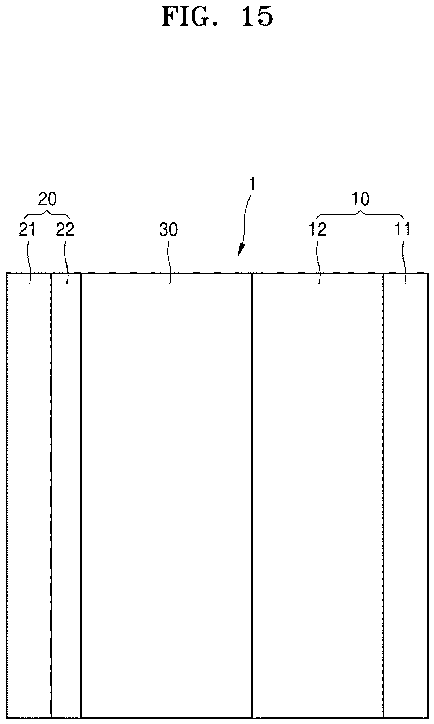

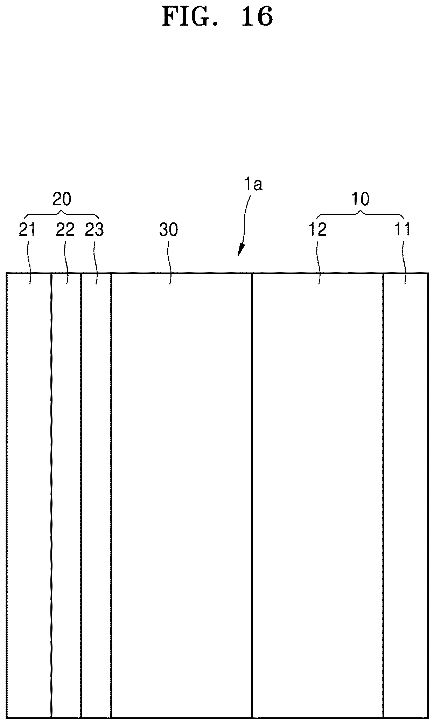

Referring to FIGS. 15 and 16, a lithium battery 1 may include: a cathode 10 including a cathode current collector 11 and a cathode active material layer 12 on one side of the cathode current collector 11; the anode 20 described above; and an electrolyte layer 30 arranged between the cathode 10 and the anode 20. Because the lithium battery 1 includes the anode 20, the cycling performance of the lithium battery 1 may be improved.

### Cathode

Referring to FIGS. 15 and 16, the lithium battery 1 according to one or more embodiments may include the cathode 10, wherein the cathode 10 may include a cathode current collector 11 and the cathode active material layer 12 arranged on one side of the cathode current collector 11.

### Cathode: Cathode Active Material Layer

The cathode active material included in the cathode active material layer 12 may be a cathode active material capable of reversible absorption and desorption of lithium ions. The cathode active material may include, for example, an oxide-based cathode active material, a sulfide-based cathode active material, and/or a (e.g., any suitable) combination thereof.

The oxide-based cathode active material may include, for example, a lithium transition metal oxide, a metal oxide, and/or a (e.g., any suitable) combination thereof. The lithium transition metal oxide may include, for example, a lithium cobalt oxide, a lithium nickel oxide, a lithium nickel cobalt oxide, a lithium nickel cobalt aluminum oxide, a lithium nickel cobalt manganese oxide, a lithium manganate, a lithium iron phosphate, and/or a (e.g., any suitable) combination thereof. The lithium oxide may include, for example, an iron oxide, a vanadium oxide, and/or a (e.g., any suitable) combination thereof.

The sulfide-based cathode active material may include, for example, nickel sulfide, copper sulfide, Li₂S, a Li₂S-containing composite, and/or a (e.g., any suitable) combination thereof.

The oxide-based cathode active material may utilize, for example, one or more composite oxides of lithium with a metal selected from among cobalt, manganese, nickel, and/or a (e.g., any suitable) combination thereof. As specific examples, such composite oxides may utilize any one compound represented by (e.g., one selected from among) the following formulas: LiₐA_{1-b}B'_{b}D₂ (wherein 0.90≤a≤1 and 0≤b≤0.5); LiₐE_{1-b}B'_{b}O_{2-c}D_{c} (wherein 0.90≤a≤1, 0≤b≤0.5, and 0≤c≤0.05); LiE_{2-b}B'_{b}O_{4-c}D_{c} (wherein 0≤b≤0.5 and 0≤c≤0.05); LiₐNi_{1-b-c}Co_{b}B'_{c}D_{α} (wherein 0.90≤a≤1, 0≤b≤0.5, 0≤c≤0.05, and 0<α≤2); LiₐNi_{1-b-c}Co_{b}B'_{c}O_{2-α}F'_{α} (wherein 0.90≤a≤1, 0≤b≤0.5, 0≤c≤0.05, and 0<α<2); LiₐNi_{1-b-c}Co_{b}B'_{c}O_{2-α}F'_{α} (wherein 0.90≤a≤1, 0≤b≤0.5, 0≤c≤0.05, and 0<α<2); LiₐNi_{1-b-c}Mn_{b}B'_{c}D_{α} (wherein 0.90≤a≤1, 0≤b≤0.5, 0≤c≤0.05, and 0<α≤2); LiₐNi_{1-b-c}Mn_{b}B'_{c}O_{2-α}F'_{α} (wherein 0.90≤a≤1, 0≤b≤0.5, 0≤c≤0.05, and 0<α<2); LiₐNi_{1-b-c}Mn_{b}B'_{c}O_{2-α}F'_{α} (wherein 0.90≤a≤1, 0≤b≤0.5, 0≤c≤0.05, and 0<α<2); LiₐNi_{b}E_{c}G_{d}O₂ (wherein 0.90≤a≤1, 0≤b≤0.9, 0≤c≤0.5, and 0.001 ≤d≤0.1); LiₐNi_{b}Co_{c}Mn_{d}GₑO₂ (wherein 0.90≤a≤1, 0≤b≤0.9, 0≤c≤0.5, 0≤d ≤0.5, and 0.001≤e≤0.1); LiₐNiG_{b}O₂ (wherein 0.90≤a≤1 and 0.001 ≤b≤0.1); LiₐCoG_{b}O₂ (wherein 0.90≤a≤1 and 0.001 ≤b≤0.1); LiₐMnG_{b}O₂ (wherein 0.90≤a≤1 and 0.001≤b≤0.1); LiₐMn₂G_{b}O₄ (wherein 0.90≤a≤1 and 0.001≤b≤0.1); QOz; QS₂; LiQS₂; V₂O₅; LiV₂O₅; Lil'O₂; LiNiVO₄; Li_{(3-f)}J₂(PO₄)₃ (0≤f≤2); Li_{(3-f)}Fe₂(PO₄)₃ (0≤f≤2); and LiFePO₄.

In the formulas representing the aforementioned compounds, A may be nickel (Ni), cobalt (Co), manganese (Mn), and/or a (e.g., any suitable) combination thereof; B' may be aluminum (Al), Ni, Co, Mn, chromium (Cr), iron (Fe), magnesium (Mg), strontium (Sr), vanadium (V), a rare earth element, and/or a (e.g., any suitable) combination thereof; D' may be oxygen (O), fluorine (F), sulfur (S), phosphorus (P), and/or a (e.g., any suitable) combination thereof; E may be Co, Mn, and/or a (e.g., any suitable) combination thereof; F' may be F, S, P, and/or a (e.g., any suitable) combination thereof; G may be Al, Cr, Mn, Fe, Mg, lanthanum (La), cerium (Ce), Sr, V, and/or a (e.g., any suitable) combination thereof; Q may be titanium (Ti), molybdenum (Mo), Mn, and/or a (e.g., any suitable) combination thereof; I' may be Cr, V, Fe, Sc, yttrium (Y), and/or a (e.g., any suitable)combination thereof; and J may be V, Cr, Mn, Co, Ni, copper (Cu), and/or a (e.g., any suitable) combination thereof. A compound having a coating layer added on a surface of the above compound may also be used. Furthermore, a mixture of the above compound with a compound having a coating layer added thereon may also be used. The coating layer added on the surface of the aforementioned compound may include, for example, compounds of a coating element, such as oxides and hydroxides of the coating element, oxyhydroxides of the coating element, oxycarbonates of the coating element, and hydroxycarbonates of the coating element. A compound forming this coating layer may be amorphous or crystalline. The coating element included in the coating layer may be Mg, Al, Co, K, Na, Ca, Si, Ti, V, Sn, Ge, Ga, B, As, Zr, and/or a (e.g., any suitable) mixture (or combination) thereof. The method of forming the coating layer may be selected within a range that does not adversely affect physical properties of a cathode active material. Examples of a coating method may include spray coating, dip coating, and/or the like. Specific coating methods are used by those of ordinary skill in the art and therefore, detailed descriptions thereof will not be provided here.

The oxide-based cathode active material may include, for example, a lithium transition metal oxide represented by Formulas 11 to 18:

Formula 11 LiₐNiₓCo_{y}M_{z}O_{2-b}A_{b}

In Formula 11,
1.0≤a≤1.2, 0≤b≤0.2, 0.8≤x<1, 0≤y≤0.3, 0<z≤0.3, and x+y+z=1,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), and/or a (e.g., any suitable) combination thereof,
A may be F, S, Cl, Br and/or a (e.g., any suitable) combination thereof,

   Formula 12 LiNiₓCo_{y}Mn_{z}O₂

   Formula 13 LiNiₓCo_{y}AlₓO₂
In Formulas 12 and 13, 0.8≤x≤0.95, 0≤y≤0.2, 0<z≤0.2, and x+y+z=1,

   Formula 14 LiNiₓCo_{y}Mn_{z}Al_{w}O₂
In Formula 14, 0.8≤x≤0.95, 0≤y≤0.2, 0<z≤0.2, 0<w≤0.2, and x+y+z+w=1,

   Formula 15 LiₐCoₓM_{y}O_{2-b}A_{b}
In Formula 15,
1.0≤a≤1.2, 0≤b≤0.2, 0.9≤x≤1, 0≤y≤0.1, and x+y=1,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), and/or a (e.g., any suitable) combination thereof, and
A may be F, S, Cl, Br and/or a (e.g., any suitable) combination thereof,

   Formula 16 LiₐNiₓMn_{y}M'_{z}O_{2-b}A_{b}
In Formula 16,
1.0≤a≤1.2, 0≤b≤0.2, 0<x≤0.3, 0.5≤y<1, 0<z≤0.3, and x+y+z=1,
M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), and/or a (e.g., any suitable) combination thereof, and
A may be F, S, Cl, Br and/or a (e.g., any suitable) combination thereof,

   Formula 17 LiₐM1ₓM2_{y}PO_{4-b}X_{b}
In Formula 17, 0.90≤a≤1.1, 0≤x≤0.9, 0≤y≤0.5, 0.9<x+y<1.1, and 0≤b≤2,
M1 may be chromium (Cr), manganese (Mn), iron (Fe), cobalt (Co), nickel (Ni), copper (Cu), zirconium (Zr), and/or a (e.g., any suitable) combination thereof,
M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), and/or a (e.g., any suitable) combination thereof, and X may be O, F, S, P, and/or a (e.g., any suitable) combination thereof.

   Formula 18 LiₐM3_{z}PO₄
In Formula 18, 0.90≤a≤1.1 and 0.9≤z≤1.1,
M3 may be chromium (Cr), manganese (Mn), iron (Fe), cobalt (Co), nickel (Ni), copper (Cu), zirconium (Zr), and/or a (e.g., any suitable) combination thereof.

The amount of the cathode active materials included in the cathode active material layer 12 may be about 80 wt% to about 99 wt%, about 90 wt% to about 99 wt%, or about 95 wt% to about 99 wt%, with respect to the total weight of the cathode active material layer 12.

The cathode active material layer 12 may further include a conductive material. The conductive material may include: carbon black, graphite powder, natural graphite, artificial graphite, acetylene black, Ketjen black, and carbon fibers; carbon nanotubes; metal powder, metal fibers, or metal tubes, such as copper, nickel, aluminum, silver, and/or the like; and conductive polymers such as polyphenylene derivatives and/or the like. However, the conductive material is not limited to the aforementioned examples and may be any material used as a conductive material in the art. In one or more embodiments, the cathode may not contain, for example, any conductive materials.

The amount of the conductive material included in the cathode active material layer 12 may be about 0.1 wt% to about 10 wt%, or about 0.1 wt% to about 5 wt%, with respect to the total weight of the cathode active material layer 12.

The cathode active material layer 12 may further include, for example, a binder. As the binder, a vinylidene fluoride/hexafluoropropylene copolymer, polyvinylidene fluoride, polyacrylonitrile, polymethyl methacrylate, polytetrafluoroethylene (PTFE), a mixture of the aforementioned polymers, and/or a styrene butadiene rubber polymer may be utilized.

The amount of the binder included in the cathode active material layer 12 may be about 0.1 wt% to about 10 wt%, or about 0.1 wt% to about 5 wt%, with respect to (100 wt% of) the total weight of the cathode active material layer 12.

The respective amounts of the cathode active material, the conductive material, and the binder included in the cathode may be at a level commonly used in lithium batteries. Depending on the intended use and configuration of a lithium battery, one or more of the conductive material and the binder may not be provided.

### Cathode: Cathode Current Collector

The materials forming the cathode current collector 11 may be any conductive material that does not react with lithium, for example, does not form an alloy or compound with lithium. The cathode current collector 11 may be, for example, a metal or an alloy. The cathode current collector 11 may be made of, for example, aluminum (Al), indium (In), copper (Cu), magnesium (Mg), stainless steel, titanium (Ti), iron (Fe), cobalt (Co), nickel (Ni), zinc (Zn), germanium (Ge), or an alloy thereof. The cathode current collector 11 may have a form selected from among sheets, foils, films, plates, porous materials, mesoporous materials, via-hole containing materials, polygonal rings, meshes, foams, and non-woven materials; however, without being limited to the aforementioned forms, any form that is available in the art may be utilized.

In one or more embodiments, the cathode current collector 11 may include a base film and a metal layer arranged on one side or both sides (e.g., opposite sides) of the base film. For example, the base film may include a polymer. For example, the polymer may be a thermoplastic polymer. For example, the polymer may include polyethylene terephthalate (PET), polyethylene (PE), polypropylene (PP), polybutylene terephthalate (PBT), polyimide (PI), and/or a (e.g., any suitable) combination thereof. The polymer may be an insulating polymer. As the base film includes an insulating thermoplastic polymer, in the event of a short circuit, the base film is softened or liquefied, blocking the operation of the battery, to thereby prevent or reduce a rapid increase in electrical current. For example, the metal layer may include aluminum (Al), indium (In), copper (Cu), magnesium (Mg), stainless steel, titanium (Ti), iron (Fe), cobalt (Co), nickel (Ni), zinc (Zn), germanium (Ge), or an alloy thereof. The cathode current collector 11 may further include a metal chip and/or a lead-tab. For detailed descriptions of the base film, the metal layer, the metal chip, and the lead-tab of the cathode current collector 11, refer to the anode current collector 21 described above. If the cathode current collector 11 has the above structure, the weight of the cathode may be reduced, and as a result, energy density of the cathode and the lithium battery may improve.

### Electrolyte Layer

### Electrolyte Layer: Electrolyte

The electrolyte layer 30 may include an electrolyte.

The electrolyte may be, for example, a liquid electrolyte, a solid electrolyte, a gel electrolyte, and/or a (e.g., any suitable) combination thereof.

The liquid electrolyte may be, for example, an organic electrolyte. The organic electrolyte may be prepared by, for example, dissolving a lithium salt in an organic solvent.

For the organic solvent, any organic solvent available in the art may be used. The organic solvent may be, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, and/or a (e.g., any suitable) mixture thereof.

The lithium salt may be any lithium salt available in the art. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiDFOB, LiN(CₓF₂ₓ₊₁SO₂)(C_{y}F_{2y+1}SO₂) (1≤x≤20 and 1≤y≤20), LiCl, Lil, and/or a (e.g., any suitable) mixture thereof. The concentration of the lithium salt may be, for example, about 0.1 M to about 5.0 M.

Examples of the solid electrolyte may include an oxide-based solid electrolyte, a sulfide-based solid electrolyte, a polymer solid electrolyte, and/or a (e.g., any suitable) combination thereof.

The solid electrolyte may be, for example, an oxide-based solid electrolyte. The oxide-based solid electrolyte may be one or more selected from among Li_{1+x+y}AlₓTi₂₋ₓSi_{y}P_{3-y}O₁₂ (0<x<2 and 0≤y<3), BaTiO₃, Pb(Zr,Ti)O₃ (PZT), Pb₁₋ₓLaₓZr_{1-y} Ti_{y}O₃ (PLZT) (0≤x<1 and 0≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (0<x<2 and 0<y<3), LiₓAl_{y}Ti_{z}(PO₄)₃ (0<x<2, 0<y<1, and 0<z<3), Li_{1+x+y}(Al, Ga)ₓ(Ti, Ge)₂₋ₓSi_{y}P_{3-y}O₁₂ (0≤x≤1 and 0≤y≤1), LiₓLa_{y}TiO₃ (0<x<2 and 0<y<3), Li₂O, LiOH, Li₂CO₃, LiAlO₂, Li₂O-Al₂O₃-SiO₂-P₂O₅-TiO₂-GeO₂, and Li₃₊ₓLa₃M₂O₁₂ (M = Te, Nb, or Zr, and x is an integer of 1 to 10). The solid electrolyte may be produced by methods such as a sintering method. The oxide-based solid electrolyte may be, for example, a garnet-type or kind (e.g., garnet) solid electrolyte selected from among Li₇La₃Zr₂O₁₂ (LLZO) and Li₃₊ₓLa₃Zr₂₋ₐMₐO₁₂ (M-doped LLZO, M=Ga, W, Nb, Ta, or Al, and x is an integer of 1 to 10).

Examples of the sulfide-based solid electrolyte may include lithium sulfide, silicon sulfide, phosphorus sulfide, boron sulfide, and/or a (e.g., any suitable) combination thereof. Sulfide-based solid electrolyte particles may include Li₂S, P₂S₅, SiS₂, GeS₂, B₂S₃, and/or a (e.g., any suitable) combination thereof. The sulfide-based solid electrolyte particles may be Li₂S or P₂S₅. The sulfide-based solid electrolyte particles may have a higher lithium-ion conductivity than other inorganic compounds. For example, the sulfide-based solid electrolyte may include Li₂S and P₂S₅. If sulfide solid electrolyte materials forming the sulfide-based solid electrolyte include Li₂S-P₂S₅, the mixing molar ratio of Li₂S to P₂S₅ may be, for example, in a range of about 50:50 to about 90:10. For example, a material such as Li₃PO₄, a halogen, a halogen compound, Li₂₊₂ₓZn₁₋ₓGeO₄ ("LISICON", 0≤x<1), Li_{3+y}PO₄₋ₓNₓ ("LIPON", 0<x<4 and 0<y<3), Li_{3.25}Ge_{0.25}P_{0.75}S₄ ("Thio-LISICON"), and Li₂O-Al₂O₃-TiO₂-P₂O₅ ("LATP") may be added to an inorganic solid electrolyte such as Li₂S-P₂S₅, SiS₂, GeS₂, B₂S₃, and/or a (e.g., any suitable) combination thereof, to prepare an inorganic solid electrolyte, and this inorganic solid electrolyte may be used as a sulfide solid electrolyte. Non-limiting examples of the sulfide solid electrolyte materials may include Li₂S-P₂S₅; Li₂S-P₂S₅-LiX (X=a halogen element); Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCl; Li₂S-SiS₂-B₂S₃-LiI; Li₂S-SiS₂-P₂S₅-LiI; Li₂S-B₂S₃; Li₂S - P₂S₅-ZₘSₙ (0<m<10 and 0<n<10, Z=Ge, Zn or Ga); Li₂S-GeS₂; Li₂S-SiS₂-Li₃PO₄; and Li₂S-SiS₂-LiₚMO_{q} (0<p<10 and 0<q<10, M=P, Si, Ge, B, Al, Ga or In). In this regard, the sulfide-based solid electrolyte material may be prepared by subjecting a starting material (e.g., Li₂S, P₂S₅, and/or the like) of the sulfide-based solid electrolyte material to a treatment, such as melt quenching, mechanical milling, and/or the like. In addition, a calcination process may be performed following the above treatment. The sulfide-based solid electrolyte may be amorphous or crystalline, or may be in a mixed state between amorphous and crystalline.

For example, the sulfide-based solid electrolyte may include an argyrodite-type or kind (e.g., argyrodite) solid electrolyte represented by Formula 19:

Formula 19 Li⁺₁₂₋ₙ₋ₓAⁿ⁺X²-₆₋ₓY⁻ₓ

In Formula 1, A may be P, As, Ge, Ga, Sb, Si, Sn, Al, In, Ti, V, Nb, or Ta, X may be S, Se, or Te, Y may be Cl, Br, I, F, CN, OCN, SCN, or N₃, and 1≤n≤5 and 0≤x≤2 may be satisfied. For example, the sulfide-based solid electrolyte may be an argyrodite-type or kind (e.g., argyrodite) compound including one or more selected from among Li₇₋ₓPS₆₋ₓClₓ wherein 0≤x≤2, Li₇₋ₓPS₆₋ₓBrₓ wherein 0≤x≤2, and Li₇₋ₓPS₆₋ₓIₓ wherein 0≤x≤2. For example, the sulfide-based solid electrolyte may be an argyrodite-type or kind (e.g., argyrodite) compound including at least one selected from among LisPSsCI, Li₆PS₅Br, and LisPSsl.

The density of an argyrodite-type or kind (e.g., argyrodite) solid electrolyte may be about 0.1 g/cc to about 2.0 g/cc, about 0.5 g/cc to about 2.0 g/cc, about 1.0 g/cc to about 2.0 g/cc, or about 1.5 g/cc to about 2.0 g/cc. With the argyrodite-type or kind (e.g., argyrodite) solid electrolyte having a density in the aforementioned ranges, the internal resistance of a solid secondary battery 1 may be reduced, and Li penetration to the solid electrolyte layers may be more effectively suppressed or reduced.

For example, the polymer solid electrolyte may include a mixture of a lithium salt and a polymer, or may include a polymer having an ion-conducting functional group. For example, the polymer solid electrolyte may be a polymer electrolyte that is in a solid state at about 25 °C and about 1 atm. For example, the polymer solid electrolyte may not contain liquid. The polymer solid electrolyte may include a polymer. For example, the polymer may be polyethylene oxide (PEO), polyvinylidene fluoride (PVDF), vinylidene fluoride-hexafluoropropylene (PVDF-HFP), a poly(styrene-b-ethylene oxide) block copolymer (PS-PEO), poly(styrene-butadiene), poly(styreneisoprene-styrene), a poly(styrene-b-divinylbenzene) block ] copolymer, a poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone (SPAEKKS), sulfonated poly(aryl ether ketone (SPAEK), poly[bis(benzimidazobenzisoquinolinones)] (SPBIBI), poly(styrene sulfonate) (PSS), and lithium 9,10-diphenylanthracene-2-sulfonate (DPASLi+), and/or a (e.g., any suitable) combination thereof. However, the polymer is not limited to the aforementioned examples and may be any suitable material generally available and/or generally utilized in the art that is used in polymer electrolyte. The lithium salt may be any lithium salt available in the art. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (x and y are each an integer of 1 to 20), LiCl, Lil, and/or a (e.g., any suitable) mixture thereof. For example, the polymer included in the polymer solid electrolyte may be a compound containing 10 or more repeating units, 20 or more repeating units, 50 or more repeating units, or 100 or more repeating units. For example, the polymer included in the polymer solid electrolyte may have a weight average molecular weight of about 1,000 Dalton or more, about 10,000 Dalton or more, about 100,000 Dalton or more, or about 1,000,000 Dalton or more.

The gel electrolyte may be, for example, a polymer gel electrolyte. For example, the gel electrolyte may have a gel state without containing a polymer.

For example, the polymer gel electrolyte may include a liquid electrolyte and a polymer, or may include an organic solvent and a polymer having an ion-conducting functional group. The polymer gel electrolyte may be, for example, a polymer electrolyte that is in a gel state at about 25 °C and about 1 atm. For example, the polymer gel electrolyte may have a gel state without containing liquid. The liquid electrolytes used in the polymer gel electrolytes may be, for example, a mixture of an ionic liquid, a lithium salt, and an organic solvent; a mixture of a lithium salt and an organic solvent; a mixture of an ionic liquid and an organic solvent; and/or a (e.g., any suitable) mixture of a lithium salt and an ionic liquid. The polymer used in the polymer gel electrolyte may be selected from among the polymers used in the solid polymer electrolyte. The organic solvent may be selected from among the organic solvents used in the liquid electrolyte. The lithium salt may be selected from among the lithium salts used in the polymer solid electrolyte. The ionic liquid may refer to a roomtemperature molten salt or a salt that is in a liquid state at room temperature, which includes (e.g., consists of) ions alone and has a melting point of room temperature or less. For example, the ionic liquid may be at least one selected from among compounds each containing: a) at least one cation selected from among ammonium, pyrrolidinium, pyridinium, pyrimidinium, imidazolium, piperidinium, pyrazolium, oxazolium, pyridazinium, phosphonium, sulfonium, triazolium, and/or a (e.g., any suitable) mixture thereof; and b) at least one anion selected from among BF₄⁻, PF₆⁻, AsF₆⁻, SbF₆⁻, AlCl₄⁻, HSO₄⁻, ClO₄⁻, CH₃SO₃⁻, CF₃CO₂⁻, Ch, Br, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻. For example, the polymer solid electrolyte may form a polymer gel electrolyte by impregnation in a liquid electrolyte in a secondary battery. The polymer gel electrolyte may further include inorganic particles. For example, the polymer included in the polymer gel electrolyte may be a compound containing 10 or more repeating units, 20 or more repeating units, 50 or more repeating units, or 100 or more repeating units. For example, the polymer included in the polymer gel electrolyte may have a weight average molecular weight of about 500 Dalton or more, about 1,000 Dalton or more, about 10,000 Dalton or more, about 100,000 Dalton or more, or about 1,000,000 Dalton or more.

The polymer gel electrolyte may include, for example, a crosslinked product of a cross-linkable monomer and a liquid electrolyte. The polymer gel electrolyte may be obtained, for example, by heat treatment of a precursor composition containing a cross-linkable monomer and a liquid electrolyte.

The cross-linkable monomer may include, for example, about 3 to about 20 reactive functional groups, about 3 to about 10 reactive functional groups, about 3 to about 8 reactive functional groups, or about 4 to about 6 reactive functional groups. The cross-linkable monomer may include, for example, an acrylic monomer including a plurality of acrylate groups, a methacrylic monomer including a plurality of methacrylate groups. The acryl-based monomer may include, for example, trimethylolpropane triacrylate, trimethylolpropane trimethacrylate, trimethylolpropane ethoxylate triacrylate, trimethylolpropane propoxylate triacrylate, ditrimethylolpropane tetraacrylate, pentaerythritol triacrylate, pentaerythritol tetraacrylate, pentaerythritol ethoxylate tetraacrylate, dipentaerythritol pentaacrylate, dipentaerythritol hexaacrylate, and/or a (e.g., any suitable) combination thereof.

The liquid electrolyte may be selected from among the liquid electrolytes described above.

### Electrolyte Layer: Porous Substrate

The electrolyte layer 30 may further include a porous substrate other than the electrolyte.

The porous substrate may be, for example, a porous film. The porous film may be, for example, a microporous film. The porous film may be, for example, a woven fabric or a nonwoven fabric. The porous film may be any porous film commonly available for a lithium battery. The porous film may include, for example, glass fibers, an olefin-based resin, a fluorine-based resin, an ester-based resin, an imide-based resin, an acryl-based resin, a cellulose-based resin, and/or a (e.g., any suitable) combination thereof. The olefin-based resin may include, for example, polyethylene, polypropylene, and/or a (e.g., any suitable) combination thereof. The fluorine-based resin may include, for example, polyvinylidene fluoride, polytetrafluoroethylene, and/or a (e.g., any suitable) combination thereof. The ester-based resin may include, for example, polyethylene terephthalate, polybutylene terephthalate, and/or a (e.g., any suitable) combination thereof. The imide-based resin may include, for example, polyamideimide, polyetherimide, and/or a (e.g., any suitable) combination thereof. The acrylic resins may include, for example, polyacrylonitrile, polyacrylate, and/or a (e.g., any suitable) combination thereof. The cellulose-based resin may include, for example, carboxymethylcellulose, microbial or bacterial cellulose, plant-based cellulose, animal-based cellulose, and/or a (e.g., any suitable) combination thereof. The porous substrate may be, for example, a separator.

The porous substrate may be prepared by the method described in more detail herein by way of example; however, without being necessarily limited thereto, the method may be adjusted in accordance with the conditions being desired or required.

First, a polymer resin, a filler, and a solvent may be mixed together to prepare a porous film forming-composition. The porous film forming-composition may be, for example, directly coated and dried on top of an electrode, thereby forming a porous film. In one or more embodiments, the porous film forming-composition may be cast and dried on a support, and the porous film exfoliated from the support may be laminated on top of an electrode to thereby form a porous film. The polymer used for the preparation of the porous film is not particularly limited, and any one of the aforementioned resins may be used. The polymer used for the preparation of the porous film may be any polymer that is usable as a binder of an electrode. The polymer used for the preparation of the porous film may include, for example, a vinylidene fluoride/hexafluoropropylene copolymer, polyvinylidene fluoride (PVDF), polyacrylonitrile, polymethyl methacrylate, and/or a (e.g., any suitable) combination thereof.

### Anode

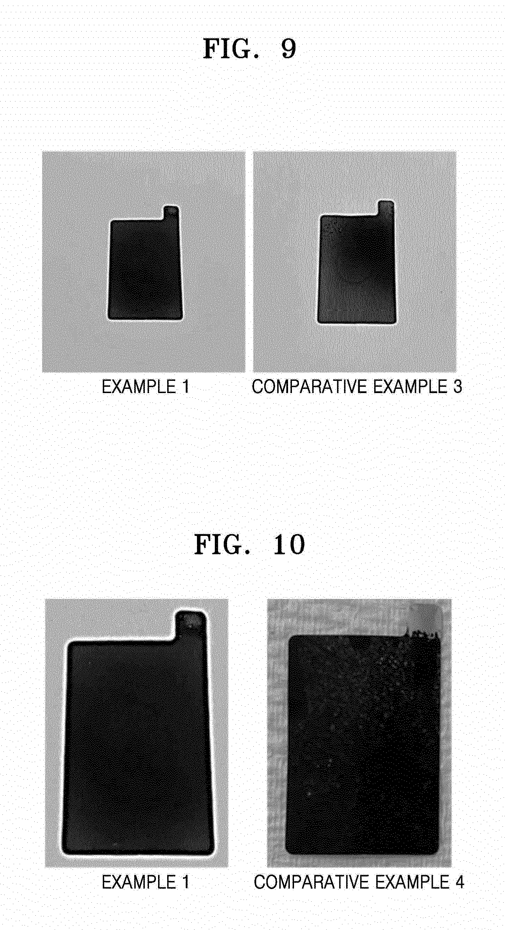

Referring to FIGS. 9 and 10, the lithium battery 1 according to one or more embodiments may include the anode 20, wherein the anode 20 may include the anode current collector 21, the electrodeposition inducing layer 22 arranged on the anode current collector 21, and an anode active material layer 23.

For details of the anode current collector 21, the electrodeposition inducing layer 22, and the anode active material layer 23, refer to the anode described above.

### Anode Preparation Method

A method of preparing an anode according to one or more embodiments may include: providing an anode current collector; providing the anode current collector to a spin coater; providing a second electrodeposition inducing layer including a conductive polymer onto the anode current collector by coating the anode current collector provided on the spin coater with a solution containing the conductive polymer; and providing a first electrodeposition inducing layer onto the second electrodeposition inducing layer by immersing the anode current collector with the second electrodeposition inducing layer formed thereon in a solution containing a metal.

First, an anode current collector may be provided. The anode current collector may be copper foil. For more details of the anode current collector, refer to the anode described above.

Next, the anode current collector may be provided onto a spin coater. By providing the anode current collector onto the spin coater, it is possible to later bring the anode current collector into rotation.

The rotation rate of the spin coater may be, for example, about 3,000 rpm or less, about 2,500 rpm or less, about 2,000 rpm or less, about 1,500 rpm or less, about 1,000 rpm or less, about 800 rpm or less, or about 500 rpm or less.

The rotation rate of the spin coater may be, for example, about 500 rpm to about 3,000 rpm, about 800 rpm to about 2,500 rpm, about 1,000 rpm to about 2,000 rpm, or about 1,500 rpm to about 2,000 rpm.

Next, a solution containing a conductive polymer may be coated onto the anode current collector to provide a second electrodeposition inducing layer containing the conductive polymer. The anode current collector provided on the spin coater may be rotated, thereby having the solution containing the conductive polymer spray-coated.

For example, as described above, the rotation rate of the spin coater may be, for example, about 3,000 rpm or less, about 2,500 rpm or less, about 2,000 rpm or less, about 1,500 rpm or less, about 1,000 rpm or less, about 800 rpm or less, or about 500 rpm or less.

The rotation rate of the spin coater may be, for example, about 500 rpm to about 3,000 rpm, about 800 rpm to about 2,500 rpm, about 1,000 rpm to about 2,000 rpm, or about 1,500 rpm to about 2,000 rpm.

The rotation time of the spin coater may be, for example, about 1 second or more to about 200 seconds or less, about 5 seconds or more to about 150 seconds or less, about 10 seconds or more to about 100 seconds or less, or about 10 seconds or more to about 90 seconds or less.

The solution containing the conductive polymer may be sprayed from a spray, and this process may be referred to as spray coating.

The spray may include a nozzle, and the diameter of the nozzle may be about 0.2 millimolar (mM) to about 0.5 mM.

The pressure at which the solution containing the conductive polymer is sprayed for spray coating, e.g., hydraulic pressure, may be about 1 psi to about 30 psi, about 2 psi to about 20 psi, about 3 psi to about 15 psi, about 4 psi to about 10 psi, or about 5 psi to about 7 psi.

In the solution containing the conductive polymer (the solution being 100 wt %), the amount of the conductive polymer may be, for example, about 30 wt% or less, about 25 wt% or less, about 20 wt% or less, about 15 wt% or less, about 10 wt% or less, about 5 wt% or less, about 2 wt% or less, or about 1 wt % or less.

In the solution containing the conductive polymer (the solution being 100 wt %), the amount of the conductive polymer may be, for example, about 1 wt% or more to about 30 wt% or less, about 1 wt% or more to about 25 wt% or less, about 1 wt% or more to about 20 wt% or less, or about 1 wt% or more to about 15 wt% or less.

The solution containing the conductive polymer may be, for example, a solution containing an organic solvent, a conductive polymer, and an anion dopant.

The organic solvent is not limited to any particular type or kind, and any organic solvent available in the art that is capable of dissolving a conductive polymer, for example, poly(3,4-ethylenedioxythiophene)-block-poly(ethylene glycol) may be utilized. The organic solvent may be, for example, nitromethane, dimethylacetimide, N-Methyl-2-pyrrolidone (NMP), and/or the like.

For details of the conductive polymer, refer to the descriptions provided with respect to the electrodeposition inducing layers.

The anionic dopant may be perchlorate, sulfate, toluene sulfonate, polystyrene sulfonate, sodium dodecylbenzene sulfonate, and/or a (e.g., any suitable) combination thereof.

Next, the anode current collector having the second electrodeposition inducing layer containing the conductive polymer formed thereon may be immersed in a solution containing a metal. By immersing the anode current collector having the second electrodeposition inducing layer containing the conductive polymer formed thereon in a solution containing a metal, a first electrodeposition inducing layer may be formed.

The solution containing the metal may be, for example, an aqueous solution containing a nitrate containing a metal.

The amount of the nitrate in the solution containing the metal may be, for example, about 10 mM or less, about 5 mM or less, about 2 mM or less, or about 1 mM or less.

The amount of the nitrate in the solution containing the metal may be, for example, about 0.1 mM to about 10 mM, about 0.5 mM to about 5 mM, about 0.8 mM to about 2 mM, or about 0.8 mM to about 1 mM.

As described with respect to the electrodeposition inducing layers, the nitrate may be, for example, silver nitrate, gold nitrate, platinum nitrate, palladium nitrate, aluminum nitrate, bismuth nitrate, tin nitrate, zinc nitrate, and/or a (e.g., any suitable) combination thereof. For example, if the nitrate is silver nitrate, as the silver nitrate is reduced, silver (Ag) particles may be distributed on the second electrodeposition inducing layer, thereby forming the first electrodeposition inducing layer containing silver.

### Method of Preparing Lithium Battery

A method of preparing a lithium battery according to one or more embodiments may include: preparing an assembly by stacking an anode, a porous film, and a cathode; and preparing a lithium battery by injecting an electrolyte into the assembly and sealing the assembly.

A cathode may be prepared. For example, a cathode active material composition may be prepared by mixing a cathode active material, a conductive material, a binder, and a solvent. The prepared cathode active material composition may be directly applied and then dried on a cathode current collector to thereby prepare a cathode plate having a cathode active material layer formed thereon. In one or more embodiments, a film obtained by casting the cathode active material composition onto a separate support and then separating the composition from the support may be laminated on the cathode current collector to thereby form a cathode plate having a cathode active material layer formed thereon. The solvent may be, for example, N-methylpyrrolidone, but is not particularly limited. It is also possible to create pores in the electrode plate by further adding a plasticizer or a pore former to the cathode active material composition. The cathode may be prepared by the following methods, but the method is not necessarily limited to these methods. For types (kinds) and amounts of the cathode active materials, conductive materials, and binders, refer to the cathode active material layer described above.

An anode may be prepared. For details of the anode, refer to the anode described above.

A porous film may be prepared. The porous film may be, for example, a polyethylene separator. For details of the porous film, refer to the electrolyte layer described above.

The anode, porous film, and cathode may be stacked to prepare an assembly. The assembly may be housed in a can or pouch. For details of the porous film, refer to the electrolyte layer described above.

The assembly may be injected with an electrolyte and sealed. As the electrolyte is injected into the assembly housed in the can or pouch, the porous film may be impregnated with the electrolyte.

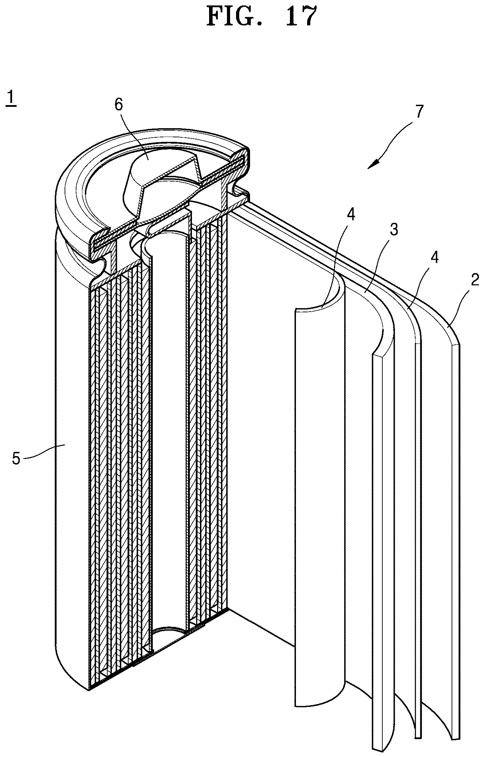

For example, the lithium battery 1 may have a structure shown in FIGS. 17 to 20.

Referring to FIG. 17, a lithium battery 1 according to one or more embodiments may include a cathode 3, the anode 2, and a separator 4. The cathode 3, the anode 2, and the separator 4 may be wound or folded to form a battery structure 7. The battery structure 7 thus formed may be accommodated in the battery case 5. The battery case 5 may be injected with a cathode electrolyte-forming composition, followed by crosslinking and sealing with a cap assembly 6, to thereby complete the preparation of the lithium battery 1. The battery case 5 may be a cylindrical type or kind, but without being necessarily limited thereto, may be a prismatic type or kind, a thin-film type or kind, and/or the like.

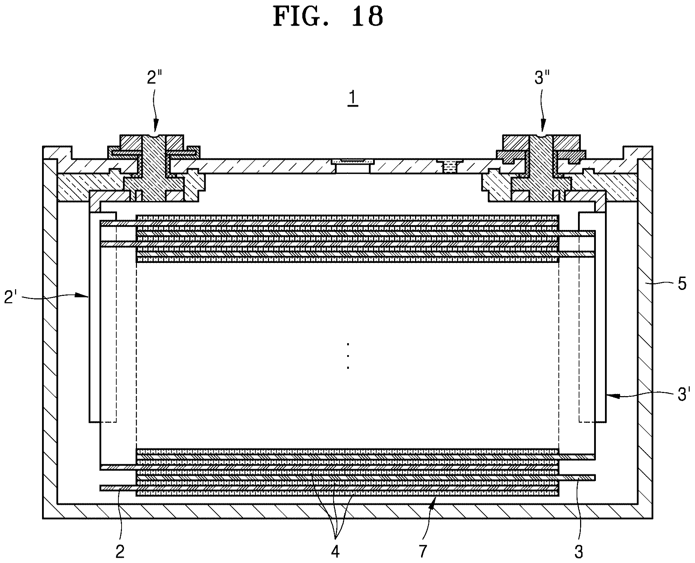

Referring to FIG. 18, a lithium battery 1 according to one or more embodiments may include a cathode 3, the anode 2, and a separator 4. The cathode 3, the anode 2, and the separator 4 may be wound or folded or laminated to form a battery structure 7. The battery structure 7 thus formed may be accommodated in the battery case 5. The battery case 5 may be injected with a cathode electrolyte-forming composition, followed by crosslinking and sealing, to thereby complete the preparation of the lithium battery 1. The battery case 5 may have a polygonal shape, but without being necessarily limited thereto, may also have a cylindrical shape, a thin-film shape, and/or the like, for example. To the cathode 3, a cathode lead-tab 3' and a cathode terminal 3" may be electrically connected. To the anode 2, an anode lead-tab 2' and an anode terminal 2" may be electrically connected.

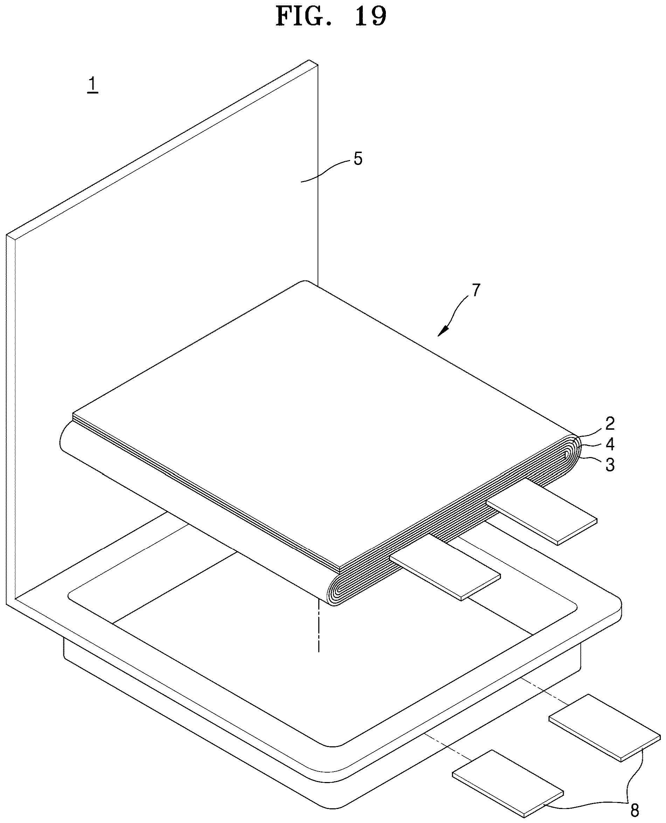

Referring to FIG. 19, a lithium battery 1 according to one or more embodiments may include a cathode 3, the anode 2, and a separator 4. The separator 4 may be arranged between the cathode 3 and the anode 2, and the cathode 3, the anode 2, and the separator 4 may be wound or folded to form the battery structure 7. The battery structure 7 thus formed may be accommodated in the battery case 5. An electrode tab 8, acting as an electrical path for guiding an electrical current generated in the battery structure 7 to the outside, may be included. The battery case 5 may be injected with a cathode electrolyte-forming composition, followed by crosslinking and sealing, to thereby complete the preparation of the lithium battery 1. The battery case 5 may have a polygonal shape, but without being necessarily limited thereto, may also have a cylindrical shape, a thin-film shape, and/or the like, for example.

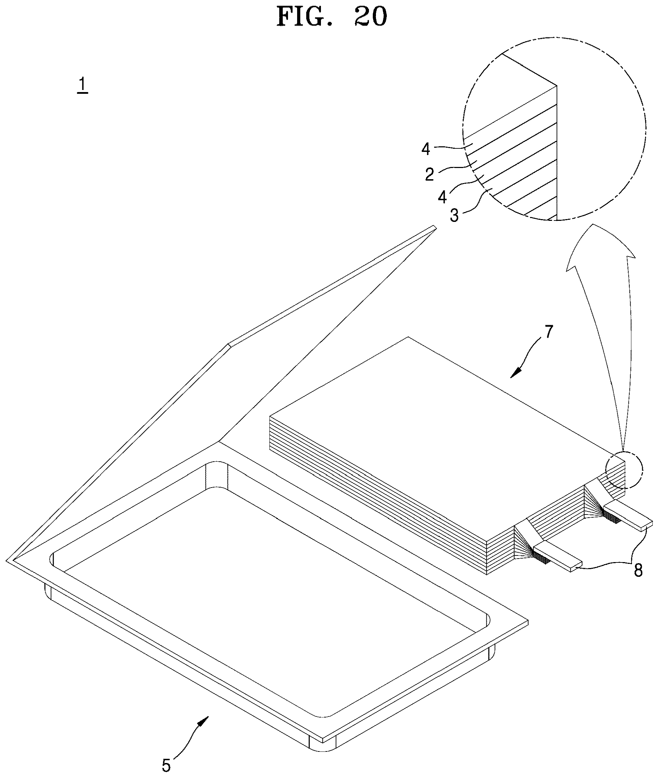

Referring to FIG. 20, a lithium battery 1 according to one or more embodiments may include a cathode 3, the anode 2, and a separator 4. The separator 4 may be arranged between the cathode 3 and the anode 2, thereby forming a battery structure. The battery structure 7 may be stacked in a bi-cell structure and then accommodated into the battery case 5. An electrode tab 8, acting as an electrical path for guiding an electrical current generated in the battery structure 7 to the outside, may be included. The battery case 5 may be injected with a cathode electrolyte-forming composition, followed by crosslinking and sealing, to thereby complete the preparation of the lithium metal battery 1. The battery case 5 may have a polygonal shape, but without being necessarily limited thereto, may also have a cylindrical shape, a thin-film shape, and/or the like, for example.

A pouch-type or kind lithium metal battery may be a lithium battery of FIGS. 17 to 20, that uses a pouch as the case. The pouch-type or kind lithium battery may include one or more battery structures. A separator may be placed between the cathode and the anode to form a battery structure. Once a plurality of battery structures are stacked in a thickness direction, the stack may be immersed in an organic electrolyte, and then accommodated and sealed in a pouch, to thereby complete the preparation of a pouch-type or kind lithium metal battery. For example, the cathode, anode, and separator described above may be simply stacked and then accommodated in a pouch as an electrode assembly, or may be wound or folded as a jelly roll-type or kind electrode assembly and then accommodated in a pouch. Subsequently, a cathode electrolyte-forming composition may be injected into a pouch, followed by crosslinking and sealing, to thereby complete the preparation of a lithium battery.

The lithium battery of the present disclosure due to having excellent or suitable lifespan characteristics, has high energy density and thus may be utilized in, for example, an electric vehicle (EV). For example, the lithium battery may be used in a hybrid vehicle, such as a plug-in hybrid electric vehicle (PHEV) and/or the like. Also, the lithium battery may be used in any field that requires a large amount of energy storage. For example, the lithium battery may be used in an electric bicycle, a power tool, and/or the like.

Multiple units of the lithium battery may be stacked together to form a battery module, and multiple units of the battery module may form a battery pack. Such a battery pack may be utilized in all types (kinds) of devices in which high capacity and high output are desired or required. For example, the battery pack may be used in a laptop computer, a smartphone, an electric vehicle, and/or the like. The battery module may include, for example, a plurality of batteries and a frame holding the batteries. The battery pack may include, for example, a plurality of battery modules and a bus bar connecting these battery modules. The battery module and/or the battery pack may further include a cooling device. A plurality of battery packs may be controlled or selected by a battery management system. The battery management system may include a battery pack, and a battery control device connected to the battery pack.

The present disclosure will be described in greater detail through the following examples and comparative examples. However, it will be understood that the examples are provided only to illustrate the present disclosure and not to be construed as limiting the scope of the present disclosure.

### Example 1: First Electrodeposition Inducing Layer Containing Metal/Second Electrodeposition Inducing Layer Containing Conductive Polymer Preparation of Anode

By using a spin coater, a solution containing about 1 wt% of the conductive polymer poly(3,4-ethylenedioxythiophene)-block-poly(ethylene glycol) (PEDOT-block-PEG) dispersed in the solvent nitromethane was sprayed and coated onto the copper current collector at a hydraulic pressure of about 5 psi to about 7 psi while the copper current collector was rotated at about 2,000 rpm, to form the second electrodeposition inducing layer. Next, the copper current collector having the second electrodeposition inducing layer formed thereon was immersed in about 1 mM silver nitrate (AgNOs) aqueous solution for about 3 minutes to allow Ag+ ions to be reduced by the conductive polymers, to thereby form the first electrodeposition inducing layer including Ag particles.

### Preparation of Cathode

LiNiₓCo_{y}Al_{1-x-y}O₂ (x>about 88%) powder and carbon conductive material (Super-P; Timcal Ltd.) were uniformly (e.g., substantially uniformly) mixed in a weight ratio of about 90:5 to form a mixture, and a polyvinylidene fluoride (PVDF) binder solution was then added to the mixture to prepare a cathode active material slurry in which the weight ratio of active material: carbon conductive material: binder is about 90:5:5.

The prepared slurry was coated onto an about 15 µm-thick aluminum substrate by using a doctor blade, and dried under reduced pressure at about 120 °C, and then rolled into a sheet by a roll press to prepare a cathode.

### Preparation of Coin Cells

A polypropylene separator (Celgard 3510) was placed between the cathode and anode prepared above, and an electrolyte was injected therein to prepare a coin cell.

As the electrolyte, a solution containing 1.15 M LiPF₆ dissolved in ethylene carbonate (EC) + ethylmethyl carbonate (EMC) + dimethyl carbonate (DMC) (volume ratio of 2:4:4) was used.

### Comparative Example 1: Electrodeposition Inducing Layer Anode Containing Conductive Polymer

An anode and a coin cell were prepared following substantially the same process as Example 1, except that the process of immersing the copper current collector with the second electrodeposition inducing layer formed thereon was not provided.

### Comparative Example 2: Cu-Substrate Anode

An anode and a coin cell were prepared following substantially the same process as Example 1, except that only the copper current collector was used without forming any electrodeposition inducing layer.

### Comparative Example 3: Electrodeposition Inducing Layer Anode Containing Conductive Polymer - Spin Coating

An anode and a coin cell were prepared following substantially the same process as Example 1 except that if (e.g., when) preparing the anode, the second electrodeposition inducing layer was formed by dropping a solution containing 1 wt% of the conductive polymer, poly(3,4-ethylenedioxythiophene)-block-poly(ethylene glycol) (PEDOT-block-PEG) dispersed in the solvent nitromethane onto the copper current collector and rotating at about 2,000 rpm.

### Comparative Example 4: Electrodeposition Inducing Layer Anode Containing Conductive Polymer - Spray Coating

An anode and a coin cell were prepared following substantially the same process as Example 1 except that if (e.g., when) preparing the anode, the second electrodeposition inducing layer was formed by spraying a solution containing about 1 wt% of the conductive polymer PEDOT-block-PEG dispersed in the solvent nitromethane onto the copper current collector at a hydraulic pressure of about 5 psi to about 7 psi.

### Comparative Example 5: PEDOT:PSS Polymer-Containing Electrodeposition Inducing Layer

When preparing the anode, by using a spin coater, a solution containing about 1 wt% of the conductive polymer poly(3,4-ethylenedioxythiophene) : poly(styrene sulfonate) (PEDOT:PSS) dispersed in nitromethane solvent was sprayed and coated onto the copper current collector at a hydraulic pressure of about 5 psi to about 7 psi while the copper current collector was rotated at about 2,000 rpm, to form the second electrodeposition inducing layer. Next, an anode and a coin cell were prepared following substantially the same process as Example 1, except that the copper current collector having the second electrodeposition inducing layer formed thereon was immersed in about 1 mM silver nitrate (AgNOs) aqueous solution for about 3 minutes to allow Ag+ ions to be reduced by the conductive polymers so that the first electrodeposition inducing layer including Ag particles was formed on the polymer surface.

### Reference Example 1: Metal-Containing First Electrodeposition Inducing Layer/Conductive Polymer-Containing Second Electrodeposition inducing layer - Ag Nanoparticle Spray

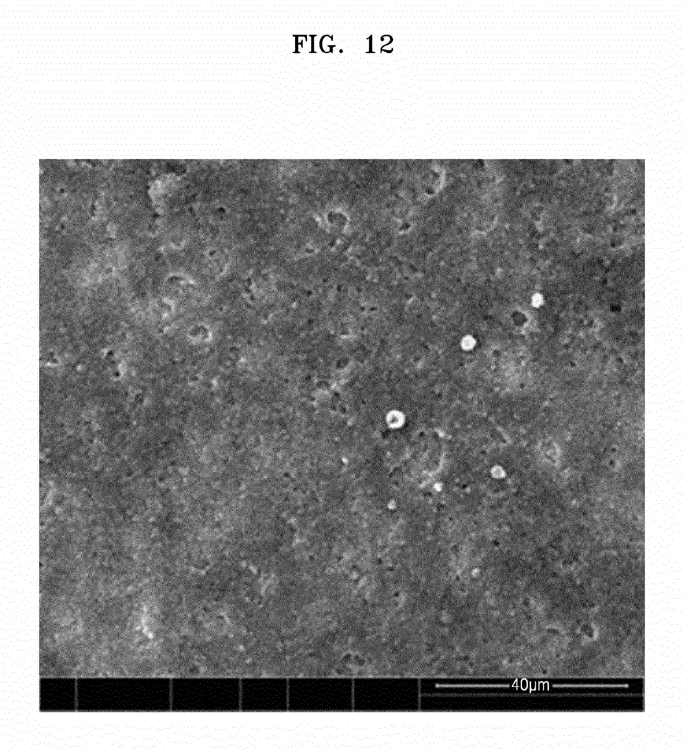

When preparing the anode, by using a spin coater, a solution containing about 1 wt% of the conductive polymer poly(3,4-ethylenedioxythiophene)-block-poly(ethylene glycol) (PEDOT-block-PEG) dispersed in nitromethane solvent was sprayed and coated onto the copper current collector at a hydraulic pressure of about 5 psi to about 7 psi while the copper current collector was rotated at about 2,000 rpm, to form the second electrodeposition inducing layer. An anode and a coin cell were prepared following substantially the same process as Example 1, except that by using a spray on the copper current collector having the second electrodeposition inducing layer formed thereon, an aqueous solution containing about 1 wt% of silver nanoparticles dispersed therein was sprayed at a hydraulic pressure of about 5 psi to about 7 psi to be coated onto the copper current collector to thereby form the first electrodeposition inducing layer. The surface of an anode with the electrodeposition inducing layer formed thereon is shown in FIG. 12.

Referring to FIG. 12, the presence of silver particles in an extremely small amount was observed, which indicates that the second electrodeposition inducing layer was formed in an extremely small amount.

### Reference Example 2: Electrodeposition Inducing Layer Anode Containing Metal and Conductive Polymer (PEDOT-block-PEG and Ag are mixed together in solvent and coated)

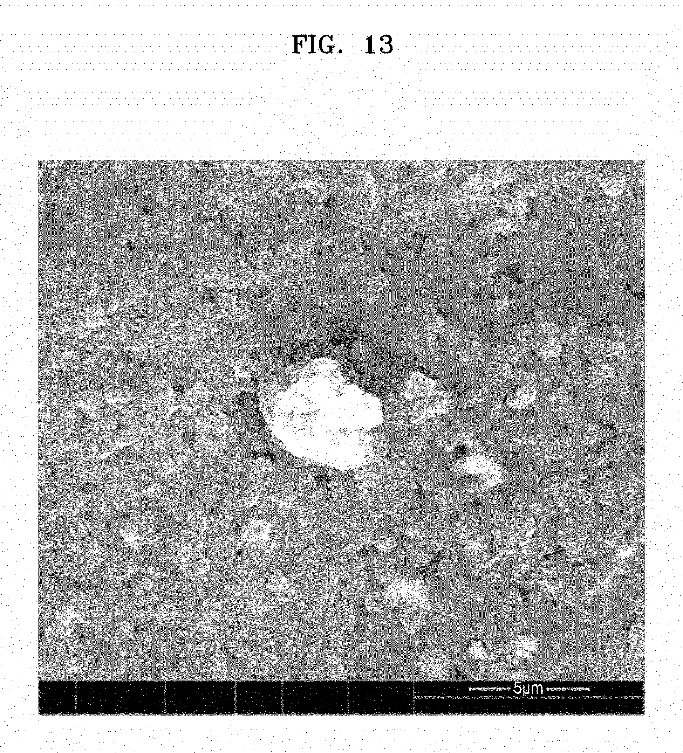

An anode and a coin cell were prepared following substantially the same process as Example 1, except that the second electrodeposition inducing layer and the first electrodeposition inducing layer were formed through a process in which: while rotating the copper current collector at about 2,000 rpm by using a spin coater, a solution containing about 1 wt% of the conductive polymer poly(3,4-ethylenedioxythiophene)-block-poly(ethylene glycol) (PEDOT-block-PEG) and about 1 wt% of silver (Ag) dispersed in nitromethane solvent, was sprayed and coated onto the copper current collector at a hydraulic pressure of about 5 psi to about 7 psi. The surface of an anode with the electrodeposition inducing layer formed thereon is shown in FIG. 13.

Referring to FIG. 13, it was found that the silver particles were present non-uniformly (e.g., substantially non-uniformly) in aggregated (e.g., agglomerated) large clumps.

### Reference Example 3: Electrodeposition Inducing Layer Anode Containing Metal and Conductive Polymer (PEDOT-block-PEG and Silver Nitrate (AgNOs) are mixed together in solvent and coated)

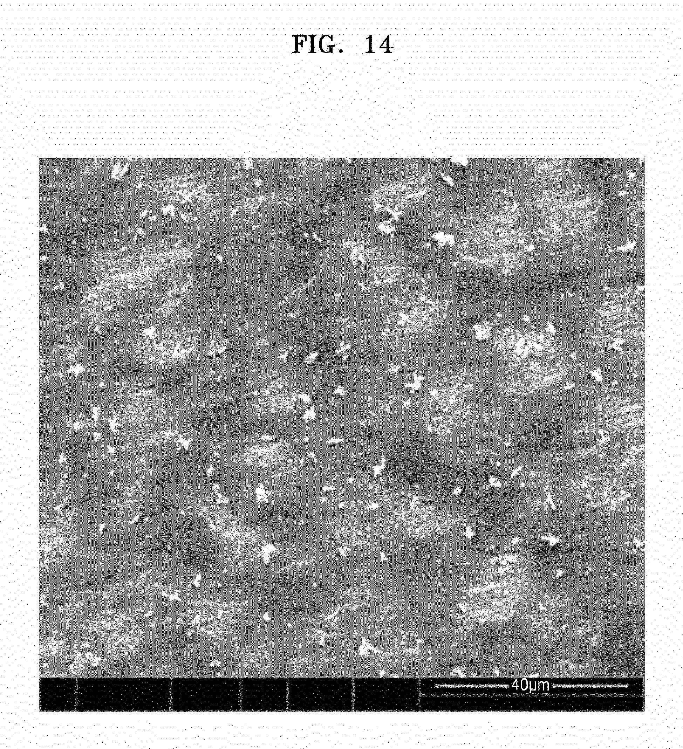

An anode and a coin cell were prepared following substantially the same process as Example 1, except that the second electrodeposition inducing layer and the first electrodeposition inducing layer were formed through a process in which: while rotating the copper current collector at about 2,000 rpm by using a spin coater, a solution containing about 1 wt% solution of the conductive polymer poly(3,4-ethylenedioxythiophene)-block-poly(ethylene glycol) (PEDOT-block-PEG) in nitromethane solvent, with a further addition of about 1 mM silver nitrate (AgNOs), was sprayed and coated onto the copper current collector at a hydraulic pressure of about 5 psi to about 7 psi. The surface of an anode with the electrodeposition inducing layer formed thereon is shown in FIG. 14.

Referring to FIG. 14, it was found that most of AgNO₃ remained on the surface in the salt form without being reduced to silver nanoparticles.

### Evaluation Example 1: Cross-Sectional SEM Evaluation

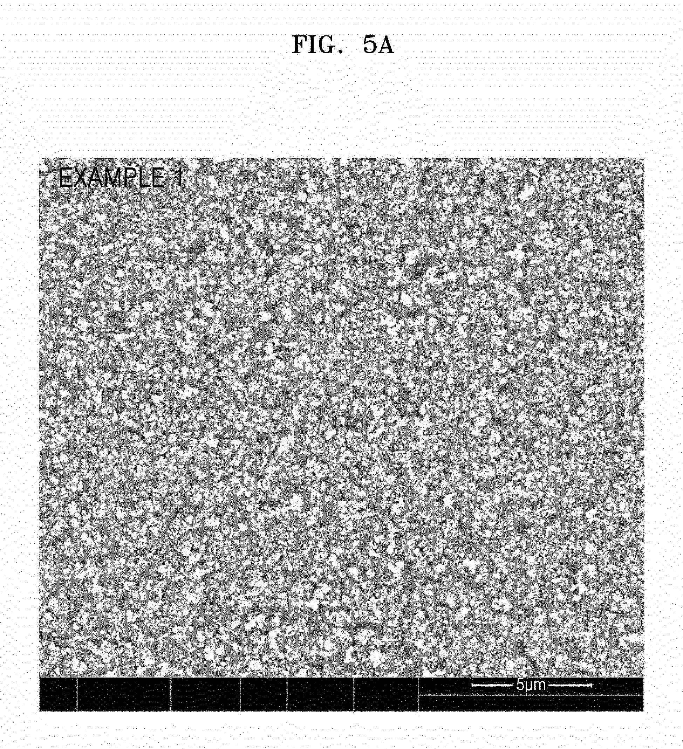

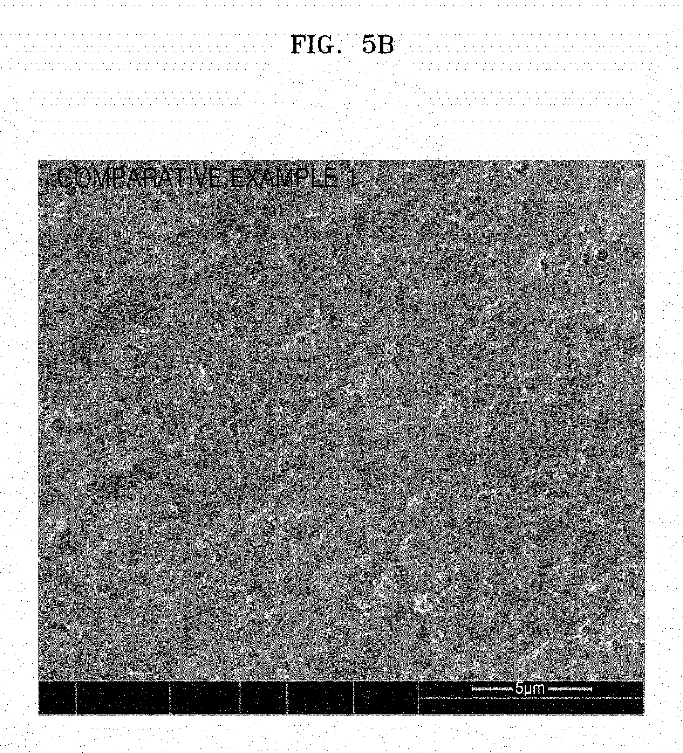

Cross-sections of the anodes including the electrodeposition inducing layers prepared in Example 1 and Comparative Example 1 were examined by SEM, and the results thereof are shown in FIGS. 5A and 5B.

Referring to FIGS. 5A and 5B, it was found that unlike Comparative Example 1, the first electrodeposition inducing layer including Ag was formed in Example 1.

### Evaluation Example 2: XRD Evaluation

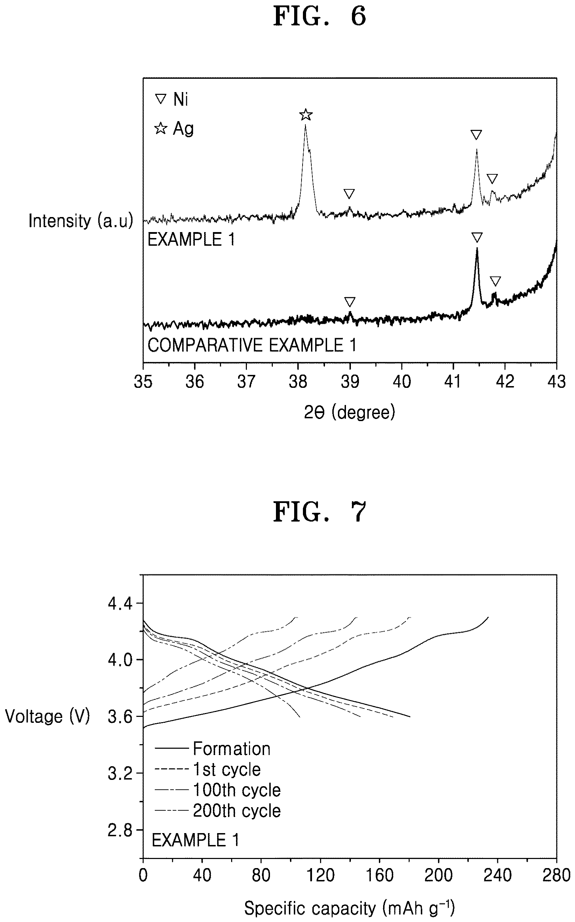

The anodes including the electrodeposition inducing layers prepared in Example 1 and Comparative Example 1 were examined by XRD, and the results thereof are shown in FIG. 6.

It was found that unlike Comparative Example 1, the first electrodeposition inducing layer including Ag was formed in Example 1.

### Evaluation Example 3: 1^{st} Charge/Discharge Curve Evaluation

The lithium battery prepared in Example 1 was charged at a constant current of about 0.1 C rate at about 25 °C until the battery voltage reached about 4.3 V (vs. Li) and then, while maintaining about 4.3 V in a constant voltage mode, the charging was cut-off at a current of about 0.05 C rate. Subsequently, the battery was discharged at a constant current of about 0.1 C rate until the battery voltage reached about 3.6 V (vs. Li) during discharge (formation cycle). In the cycle, the lithium batteries were each charged at a constant current of about 0.2 C rate until the battery voltage reached about 4.3 V (vs. Li) and then, while maintaining about 4.3 V in a constant voltage mode, the charging was cut-off at a current of about 0.05 C rate. Subsequently, the battery was discharged at a constant current of about 0.5 C rate until the battery voltage reached about 3.6 V (vs. Li) during discharge.

This cycle was repeated under the same conditions up to the 200^{th} cycle. The charge-discharge curve is shown in FIG. 7.

### Evaluation Example 4: Charge/Discharge Test

The lithium batteries prepared in Example 1 and Comparative Examples 1 and 2 were each charged at a constant current of about 0.1 C rate at about 25 °C until the battery voltage reached about 4.3 V (vs. Li) and then, while maintaining about 4.3 V in a constant voltage mode, the charging was cut-off at a current of about 0.05 C rate. Subsequently, the battery was discharged at a constant current of about 0.1 C rate until the battery voltage reached about 3.6 V (vs. Li) during discharge (formation cycle).

In the cycle, the lithium batteries were each charged at a constant current of about 0.2 C rate until the battery voltage reached about 4.3 V (vs. Li) and then, while maintaining about 4.3 V in a constant voltage mode, the charging was cut-off at a current of about 0.05 C rate. Subsequently, the battery was discharged at a constant current of about 0.5 C rate until the battery voltage reached about 3.6 V (vs. Li) during discharge.

This cycle was repeated under the same conditions up to the 200^{th} cycle.

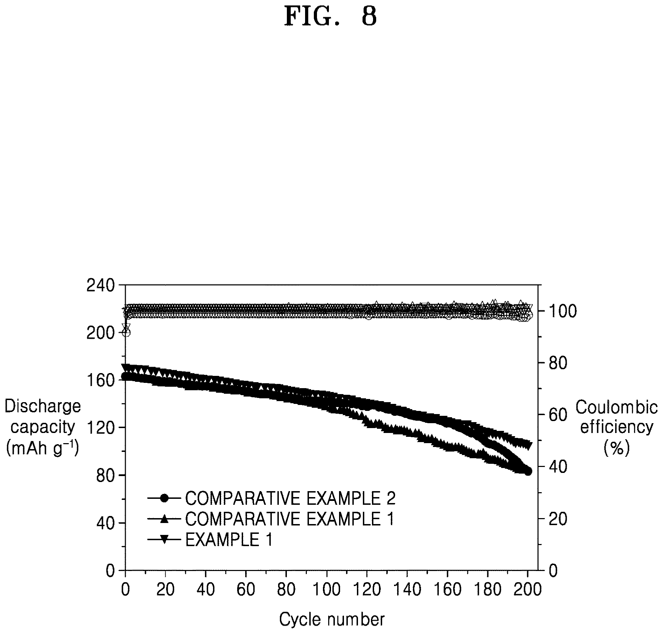

Throughout the charge-discharge cycles above, a rest period of about 10 minutes was provided after each charge/discharge cycle. A part of the roomtemperature charge/discharge test results is shown in Table 1 and FIG. 8. Capacity retention is represented by Equation 1. Capacity Retention [%] = [Discharge Capacity in 200th Cycle / Discharge Capacity in 1st Cycle] x 100

**Table 1**

| | First Electrodeposition Inducing Layer/Second Electrodeposition Inducing Layer Composition | Capacity Retention [%] |
|---|---|---|
| Example 1 | Ag/PEDOT-block-PEG | 62.8 |
| Comparative Example 1 | -/PEDOT-block-PEG | 50.2 |
| Comparative Example 2 | - | 50.7 |
| Comparative Example 3 | -/PEDOT-block-PEG | 43.2 |
| Comparative Example 4 | -/PEDOT-block-PEG | 49.8 |
| Comparative Example 5 | Ag/PEDOT:PSS | 48.4 |
| Reference Example 1 | Ag/PEDOT-block-PEG | 53.3 |
| Reference Example 2 | Ag/PEDOT-block-PEG | 56.1 |
| Reference Example 3 | Ag/PEDOT-block-PEG | 50.7 |

As shown in Table 1 and FIG. 8, compared with the lithium batteries of Comparative Examples 1 to 5 and Reference Examples 1 to 3, the lithium battery in Example 1 shows improved capacity retention.

Without being bound by any particular theory, it is believed that this improved capacity retention is attributable to the fact that the first electrodeposition inducing layer containing a conductive polymer, and the second electrodeposition inducing layer containing a metal suppressed or reduced lithium denderite formation and induced substantially uniform plating of lithium.

The lithium battery of Comparative Example 1 containing only the second electrodeposition inducing layer was found to show poor lifespan characteristics. Without being bound by any particular theory, it is believed that this result was due to the fact that if containing the second electrodeposition inducing layer alone, the electrodeposition inducing layer fails to suppress or reduce lithium dendrite formation and also fails to induce substantially uniform lithium plating.

### Evaluation Example 5: Characterization of Electrodeposition Inducing Layer Formation According To Coating Method

The coating state of the anode including the respective electrodeposition inducing layers prepared in Example 1 and Comparative Example 3, or Example 1 and Comparative Example 4 was characterized, and the results thereof are shown in FIGS. 9 and 10.

Referring to FIG. 9, for the second electrodeposition inducing layer formed in Comparative Example 3, due to its low viscosity of the polymer solution, the polymer solution was pushed out from the disc while the current collector is spinning, indicating that the formation of the second electrodeposition inducing layer was difficult.

Referring to FIG. 10, for the second electrodeposition inducing layer formed in Comparative Example 4, it was found that if spray coating is the only method used, the coating is performed by solely relying on the experimenter's level of expertise, and as a result, the uniformity of coating was poor compared with the spin-spray coating that was performed under substantially uniform conditions.

### Evaluation Example 6: Contact Angle Characterization of Electrodeposition Inducing Layers

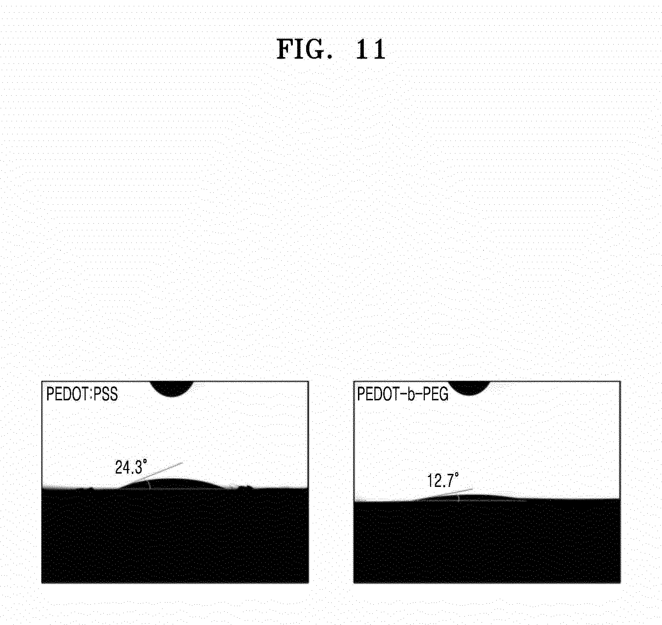

The contact angle of the electrodeposition inducing layers prepared in Example 1 and Comparative Example 5 with respect to the electrolyte were characterized, and the results thereof are shown in FIG. 11.

Referring to FIG. 11, it was found that compared with the PEG repeating units, the PSS repeating units have low affinity to electrolyte so that as shown in the drawing, the contact angle was greater if (e.g., when) a liquid electrolyte was dropped. In addition, it was found that low affinity to electrolyte lead to a decrease in wettability of the electrodeposition inducing layers with liquid electrolyte, such that if (e.g., when) applied in a battery, it lead to an increased interfacial resistance and consequently cause the cell performance to deteriorate.

Hereinbelow, one or more embodiments will be described in greater detail with reference to the accompanied drawings; however, the present disclosure is not limited to these examples. While one or more embodiments have been described with reference to the drawings, it will be understood by those of ordinary skill in the art that one or more suitable changes in form and details may be made therein without departing from the spirit and scope of the disclosure as defined by the following claims and equivalents thereof.

According to one aspect, a lithium metal battery having improved cycling performance may be provided by employing an anode for a lithium metal battery having a novel structure.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

As used herein, the terms "use," "using," and "used" may be considered synonymous with the terms "utilize," "utilizing," and "utilized," respectively.

It should be understood that embodiments described herein should be considered in a descriptive sense only and not for purposes of limitation. Descriptions of features or aspects within each embodiment should typically be considered as available for other similar features or aspects in one or more embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

## Claims

1. An anode (20) comprising:
an anode current collector (21); and
an electrodeposition inducing layer (22) on the anode current collector (21),
wherein the electrodeposition inducing layer (22) comprises:
a first electrodeposition inducing layer (22a); and
a second electrodeposition inducing layer (22b) between the first electrodeposition inducing layer (22a) and the anode current collector (21), wherein the first electrodeposition inducing layer (22a) comprises a metal,
wherein the second electrodeposition inducing layer (22b) comprises a conductive polymer, and
wherein the anode (20) is for a lithium metal battery (1).

2. The anode (20) as claimed in claim 1,
wherein the metal is silver (Ag), gold (Au), platinum (Pt), palladium (Pd), aluminum (Al), bismuth (Bi), tin (Sn), zinc (Zn), or a combination thereof.

3. The anode (20) as claimed in claim 1 or 2,
wherein the first electrodeposition inducing layer (22a) further comprises a nitrate;
wherein preferably the nitrate is silver nitrate, gold nitrate, platinum nitrate, palladium nitrate, aluminum nitrate, bismuth nitrate, tin nitrate, zinc nitrate, or a combination thereof.

4. The anode (20) as claimed in any one of claims 1 to 3,
wherein the metal has a particulate form and is uniformly distributed or heterogeneously distributed on the second electrodeposition inducing layer (22b).

5. The anode (20) as claimed in any one of claims 1 to 4,
wherein the conductive polymer is a polymer containing an electronically-conductive repeating unit, a polymer containing an ionically-conductive repeating unit, a polymer containing an electronically-conductive repeating unit and an ionically-conductive repeating unit, or a combination thereof;
wherein preferably
- the polymer containing the electronically-conductive repeating unit is poly(3,4-ethylenedioxythiophene), polyaniline, polypyrrole, polyacetylene, polydopamine, or a combination thereof; and/or
- the polymer containing the ionically-conductive repeating unit is polyethylene glycol, polypropylene oxide, polyimide, polyamine, polynitrile, or a combination thereof; and/or
- the polymer containing an electronically-conductive repeating unit and an ionically-conductive repeating unit is a copolymer of the polymer containing an electronically-conductive repeating unit and the polymer containing an ionically-conductive repeating unit; and/or
- wherein the copolymer comprises a block copolymer, and
wherein the block copolymer comprises:
i) one or more polymers selected from among poly(3,4-ethylenedioxythiophene), polyaniline, polypyrrole, polyacetylene, and polydopamine; and
ii) one or more polymers selected from among polyethylene glycol, polypropylene oxide, polyimide, polyamine, and polynitrile.

6. The anode (20) as claimed in any one of claims 1 to 5,
wherein the metal is in a form of metal particles and the metal particles have a particle diameter of 150 nm to 250 nm.

7. The anode (20) as claimed in any one of claims 1 to 6, wherein the second electrodeposition inducing layer (22b) has a thickness of 0.1 µm to 25 µm.

8. The anode (20) as claimed in any one of claims 1 to 7, further comprising an anode active material layer (23) on a side of the second electrodeposition inducing layer (22b), wherein:
the anode active material layer (23) is a metal layer, the metal layer comprising lithium metal or a lithium alloy; or
the anode active material layer (23) comprises lithium foil, lithium powder, plated lithium, or a combination thereof.

9. The anode (20) as claimed in any one of claims 1 to 8, further comprising an anode active material layer (23), wherein the anode active material layer (23) comprises non-fibrous lithium or non-acicular lithium, and the anode active material layer (23) further comprises plate-shaped lithium.

10. The anode (20) as claimed in any one of claims 1 to 9, further comprising an anode active material layer (23), wherein the anode active material layer (23) has a thickness of 0.1 µm to 100 µm.

11. A lithium metal battery (1) comprising:
A cathode (10) comprising a cathode current collector (11) and a cathode active material layer (12) on a side of the cathode current collector (11);
the anode (20) as claimed in any one of claims 1 to 10; and
an electrolyte layer (30) between the cathode (10) and the anode (20).

12. The lithium metal battery (1) as claimed in claim 11,
wherein an electrolyte of the electrolyte layer (30) is a liquid electrolyte, a solid electrolyte, a gel electrolyte, or a combination thereof,
the solid electrolyte being an oxide-based solid electrolyte, a sulfide-based solid electrolyte, a polymer solid electrolyte, or a combination thereof, and
the gel electrolyte comprising a polymer gel electrolyte.

13. The lithium metal battery (1) as claimed in claim 11 or 12,
wherein at least one selected from among the cathode current collector (11) and the anode current collector (21) comprises a base film and a metal layer on one side or both sides of the base film,
wherein the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

14. A method of preparing an anode (20) for a lithium metal battery (1), the method comprising:
providing an anode current collector (21);
providing the anode current collector (21) on a spin coater;
providing a second electrodeposition inducing layer (22b) containing a conductive polymer onto the anode current collector (21) by coating the anode current collector (21) provided on the spin coater with a solution containing the conductive polymer; and
providing a first electrodeposition inducing layer (22a) onto the second electrode position inducing layer (22b) by immersing, in a solution containing a metal, the anode current collector (21) comprising the second electrode position inducing layer (22b) thereon.

15. The method as claimed in claim 14,
wherein the conductive polymer is a polymer containing an electronically-conductive repeating unit, a polymer containing an ionically-conductive repeating unit, a polymer containing an electronically-conductive repeating unit and an ionically-conductive repeating unit, or a combination thereof, and
the solution containing the metal comprises a nitrate.
